(19)

Europäisches
Patentamt

European
Patent Office

Office européen
des brevets

(11) **EP 2 712 191 A2**

(12) **EUROPEAN PATENT APPLICATION**
published in accordance with Art. 153(4) EPC

(43) Date of publication:
**26.03.2014  Bulletin 2014/13**

(51) Int Cl.:
**H04N 7/24** *(2011.01)*

(21) Application number: **12786336.3**

(22) Date of filing: **21.05.2012**

(86) International application number:
**PCT/KR2012/003988**

(87) International publication number:
**WO 2012/157999 (22.11.2012 Gazette 2012/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.05.2011   US 201161487710 P**

(71) Applicant: **LG Electronics Inc.
Yeongdeungpo-gu
Seoul 150-721 (KR)**

(72) Inventors:
• **CHOE, Jeehyun
Seoul 137-724 (KR)**

• **SUH, Jongyeul
Seoul 137-724 (KR)**
• **KIM, Jinpil
Seoul 137-724 (KR)**
• **MOON, Kyoungsoo
Seoul 137-724 (KR)**
• **HONG, Hotaek
Seoul 137-724 (KR)**
• **LEE, Joonhui
Seoul 137-724 (KR)**

(74) Representative: **Frenkel, Matthias Alexander
Wuesthoff & Wuesthoff
Schweigerstrasse 2
81541 München (DE)**

(54) **VIDEO STREAM TRANSMITTING DEVICE, VIDEO STREAM RECEIVING DEVICE, VIDEO STREAM TRANSMITTING METHOD, AND VIDEO STREAM RECEIVING METHOD**

(57)    The present invention provides a video stream transmitting device, a video stream receiving device, a video stream transmitting method, and a video stream receiving method. According to one embodiment of the present invention, provided is a video stream transmitting method which comprises the steps of: sampling an UHD video steam to divide the sampled UHD video stream into at least one viewable HD video sub-stream, and encoding each of the divided at least one HD video sub-stream; performing a multiplexing process, including the at least one HD video sub-stream and signaling information which indicates a relation between the UHD video stream and the at least one HD video sub-stream; and transmitting the multiplexed at least one HD video sub-stream and signaling information.

FIG. 1

## Description

[Technical Field]

The present invention relates to a video stream transmitting device, a video stream receiving device, a video stream transmission method, and a video stream reception method.

[Background Art]

As video signal processing speed increases, research is underway into a method for encoding/decoding an ultra high definition (UHD) video. An UHD video is defined as a video having definition four times or sixteen times higher than that of a high definition (HD) image. High-efficiency codec technology for transmitting a television signal containing the UHD video is being developed by some standards organizations for a single codec. However, current broadcast systems do not have a technique for transmitting the UHD video defined therefor. Accordingly, even if a method for encoding/decoding the UHD video is proposed, current broadcast systems cannot transmit/receive the UHD video.

In addition, even if a system to transmit and receive the UHD video is provided, it is rarely possible to immediately utilize the system if the system is not compatible with a conventional video transceiving system. Accordingly, compatibility with the conventional broadcast or video transceiving system is also an issue.

[Disclosure]

[Technical Problem]

An object of the present invention devised to solve the problem lies in a video stream transmitting device, a video stream receiving device, a video stream transmission method, and a video stream reception method which are capable of efficiently transceiving an ultra high definition video stream.

Another object of the present invention is to provide a video stream transmitting device, a video stream receiving device, a video stream transmisson method, and a video stream reception method which are capable of transceiving a video stream compatible with the current broadcast system and implementing an ultra high definition video stream.

[Technical Solution]

The object of the present invention can be achieved by providing a video stream transmission method including the steps of sampling a ultra high definition (UHD) video stream, splitting the sampled video stream into at least one viewable high definition (HD) video sub-stream, and encoding each of the at least one split HD video sub-stream, multiplexing signaling information describing a relation between the UHD video stream and the HD video sub-stream and the HD video sub-stream, and transmitting the multiplexed HD video sub-stream and the signaling information.

The signaling information may include an identifier of the HD video sub-stream or sampling mode information about the sampling. The signaling information may include an identifier to identify a sub-video with a size of an HD frame included in a UHD screen. The signaling information may include resolution information about a UHD screen. The signaling information may include information about a transmission medium for the HD video sub-stream.

In another aspect of the present invention, provided herein is A video stream reception method including demultiplexing a stream containing at least one high definition (HD) video sub-stream produced by sampling a ultra high definition (UHD) video stream and signaling information describing a relation between the UHD video stream and the HD video sub-stream, decoding the demultiplexed signaling information, and decoding the demultiplexed HD video sub-stream using the decoded signaling information.

The signaling information may include a descriptor to describe the HD video sub-stream. The descriptor may include information about the sampling.

The signaling information may include a descriptor to describe the relation between the UHD video stream and the HD video sub-stream. The descriptor may include service type information to be provided to the HD video sub-stream

In another aspect of the present invention, provided herein is a video stream transmitting device including an encoder to sample a ultra high definition (UHD) video stream, split the sampled video stream into at least one viewable high definition (HD) video sub-stream, and encode each of the at least one split HD video sub-stream, a multiplexer to multiplex signaling information describing a relation between the UHD video stream and the HD video sub-stream and the HD video sub-stream, and a transmitter to transmit the multiplexed HD video sub-stream and the signaling information.

The HD video sub-stream may include information about the sampling.

In another aspect of the present invention, provided herein is a video stream receiving device including a demultiplexer to demultiplex a stream containing at least one high definition (HD) video sub-stream produced by sampling a ultra high definition (UHD) video stream and signaling information describing a relation between the UHD video stream and the HD video sub-stream, a signaling information decoder to decode the demultiplexed signaling information, and a video decoder to decode the demultiplexed HD video sub-stream using the decoded signaling information.

[Advantageous Effects]

According to one embodiment of the present invention, an ultra high definition video stream may be efficiently transmitted and received.

In addition, according to one embodiment of the present invention, a video stream compatible with the current broadcast system may be transmitted and received, and an ultra high definition video stream may be implemented.

[Description of Drawings]

FIG. 1 is a view illustrating an example of transmission of an ultra high definition (UHD) video stream according to one embodiment of the present invention;

FIG. 2 is a view illustrating an example of a video splitter subsampling a UHD video stream into viewable HD video streams;

FIG. 3 is a view illustrating an example of a stream receiver to receive and process split HD video streams according to one embodiment of the present invention;

FIG. 4 is a view exemplarily illustrating signaling information according to one embodiment of the present invention;

FIG. 5 is a view exemplarily illustrating a sub-stream descriptor in signaling information according to one embodiment of the present invention;

FIG. 6 is a view exemplarily illustrating values in the UHD_subsampling_mode field and corresponding descriptions thereof;

FIG. 7 is a view exemplarily illustrating values of the compatibility_level field and corresponding descriptions thereof;

FIG. 8 is a view illustrating an example of allocation of a sub-video to a sub-stream;

FIGs. 9 and 10 are views exemplarily illustrating an interleaving mode in signaling information according to one embodiment of the present invention;

FIG. 11 is a view exemplarily illustrating a sampling factor;

FIG. 12 is a view exemplarily illustrating the ref_sub_video_flag field;

FIG. 13 is a view exemplarily illustrating a combine descriptor according to one embodiment of the present invention;

FIG. 14 is a view exemplarily illustrating values of the UHD_sub_service_type field;

FIG. 15 is a view exemplarily illustrating values of the original_UHD_resolution field;

FIG. 16 is a view exemplarily illustrating values of the Linked_media_sync_type field;

FIG. 17 is a view exemplarily illustrating a format of a supplemental enhancement information (SEI) payload of an elementary video stream;

FIG. 18 is a view exemplarily illustrating a format of an SEI message of an elementary video stream;

FIG. 19 is a view exemplarily illustrating sampling information according to a technique of subsampling of a UHD video in an elementary video stream;

FIG. 20 is a view exemplarily illustrating identifying UHD content using stream_content and component_type in a DVB system;

FIG. 21 is a view exemplarily illustrating another embodiment of the sub-stream descriptor;

FIG. 22 is a view illustrating an example of restoration of video pixels using a reference video pixel according to the signaling information;

FIG. 23 is a view illustrating an example of a receiver according to one embodiment of the present invention;

FIG. 24 is a view illustrating a video stream transmission method according to one embodiment of the present invention; and

FIG. 25 is a view illustrating a video stream reception method according to one embodiment of the present invention.

[Best Mode]

Hereinafter, embodiments of the present invention will be described with reverence to the drawings.

A description will be given of an example of dividing an H × V video into n streams of h × v video to transmit an ultra high definition (UHD) video. For example, H × V may represent UHD 3840 × 2160 resolution, and h × v may represent high definition (HD) 1920 x 1080 resolution. The size of H × V relative to h × v may vary depending upon splitting techniques and the number of split pieces. For example, a 4K UHD video stream may be split into four HD video streams. A 16K UHD video stream, for example, may be split into 16 HD video streams according to the resolutions of the UHD video streams and the HD streams. As in the above exemplary relation between a UHD video stream and HD video streams, embodiments of the present invention disclose an example of subsampling a video stream of a first resolution and splitting the same into video streams of a second resolution to transceive the video stream.

Hereinafter, a description will be given, assuming that a 4K UHD video stream is split into four HD video streams, but embodiments of the present invention are not limited thereto. The same concept is applicable to different splitting techniques and sizes. In addition, in the description given below, the videos before and after splitting of a video stream will be represented by terminological pairs such as video-sub-video, content-sub-content, stream-sub-stream, and service-sub-service. In addition, when a stream carrying a sub-video, a sub-stream, a sub-content, or a sub-service is transmitted, it may be a elementary video stream, which is a unit of independent transmission.

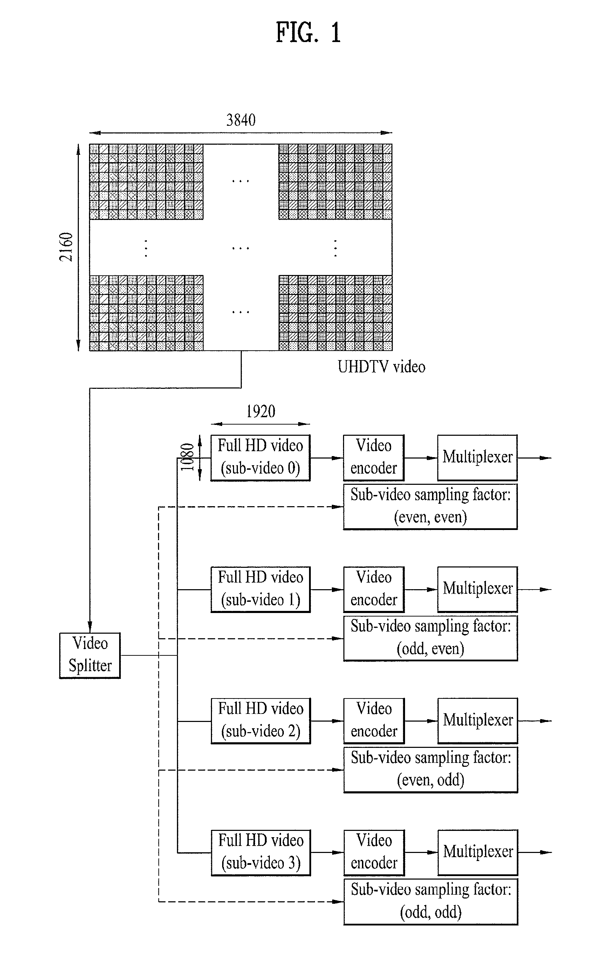

FIG. 1 is a view illustrating an example of transmission of a UHD video stream according to one embodiment of the present invention.

A video splitter may perform subsampling of a 3840 × 2160 UHD video stream according to sub-video sampling factors and split the video stream into four sub-streams. Each of the four split sub-streams may be a 1920 × 1080 HD video stream. Herein, the four HD video streams may be respectively referred to as sub-video 0, sub-video 1, sub-video 2, and sub-video 3, and may be a visual video signal as a full HD video stream, depending upon the sampling technique.

The sub sampling factors used in subsampling may be respectively referred to as even, even), (odd, even), (even, odd), (odd, odd) for the respective split streams, which will be described in detail later.

In this embodiment, video encoders may use the respective sub-video sampling factors to encode each sub-video into an HD video stream. Alternatively, videos for at least one sub-video may be collected, and thereby one sub-stream may be transmitted.

Each of the multiplexers may multiplex an encoded video stream and signaling information and output a multiplexed stream. The output stream may be transmitted over the same broadcast medium, or may be transmitted over two or more media such as broadcast media or Internet media. The signaling information will be described below in detail.

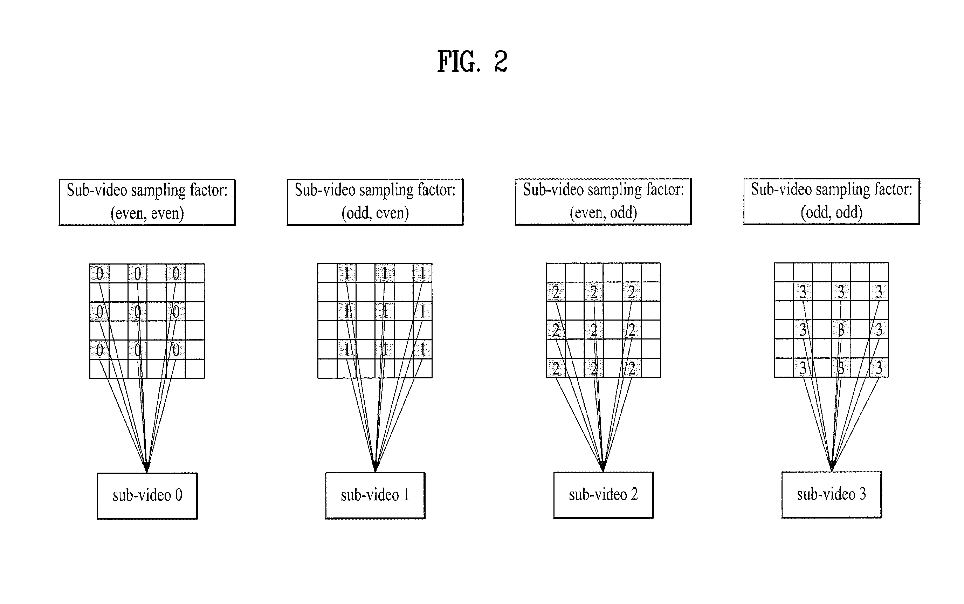

FIG. 2 is a view illustrating an example of a video splitter subsampling a UHD video stream into viewable HD video streams.

The video splitter may perform subsampling of a UHD video stream into HD video streams according to a sub-video sampling factor. Depending on difference in resolution between the UHD video and the HD video, plural sub-video sampling factors may be included. In this example, in the case that the UHD video has a resolution as four times high as that of the HD video, four sub-video sampling factors ((even, even), (odd, even), (even, odd), (odd, odd)) are exemplarily provided. Four pixels included in 2 × 2 pixels may be divided and numbered 0, 1, 2, and 3, as shown in FIG. 2.

According to (even, even), which is a first sub-video sampling factor, an HD video, sub-video 0 may be made by subsampling the upper left pixels, indicated by 0, included in the 2 × 2 pixels of the UHD video. According to (odd, even), which is a second sub-video sampling factor, an HD video, sub-video 1 may be made by subsampling the upper right pixels, indicated by 1, included in the 2 × 2 pixels of the UHD video. According to (even, odd), which is a third sub-video sampling factor, an HD video, sub-video 2 may be made by subsampling the lower left pixels, indicated by 2, included in the 2 × 2 pixels of the UHD video. Similarly, according to (odd, odd), which is a fourth sub-video sampling factor, an HD video, sub-video 3 may be made by subsampling the lower right pixels, indicated by 3, included in the 2 × 2 pixels of the UHD video.

In the case that the UHD video has a resolution four times that of the HD video, when subsampling is performed as shown in the figure, sub-videos 0, 1, 2, and 3 may all become viewable HD video content. The stream receiver may process and broadcast a video stream of only one of the four HD videos, or receive the four HD video streams simultaneously and output a video signal into a UHD video, depending upon the performance thereof.

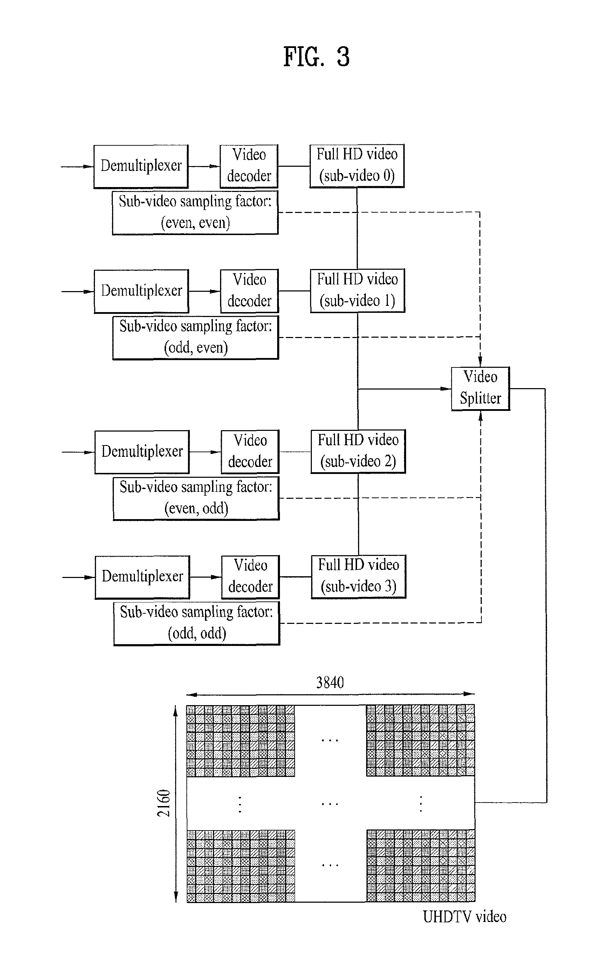

FIG. 3 is a view illustrating an example of a stream receiver to receive and process split HD video streams according to one embodiment of the present invention.

Each of the demultiplexers receives a stream formed by multiplexing an HD video stream subsampled from a corresponding UHD stream and signaling information therefor, and demultiplexes the received stream, outputting the subsampled HD video stream. In the case that one sub-stream is transmitted by collecting two or more sub-videos in contrast with the illustrated example, the demultiplexers may receive a stream through which the two or more sub-videos are transmitted and demultiplex the stream into respective sub-video streams.

The video decoders may decode the HD streams according to the respective sub sampling factors and output the decoded streams. In the example shown in FIG. 3, the output video streams may be four viewable full HD video streams.

A video merger may combine the four video streams into one UHD video stream using the sub sampling factors. For example, following the process of the FIG. 2 in reverse order, the video merger may output one UHD video stream from the subsampled HD video streams.

Hereinafter, a description will be given of signaling information for the case of transmitting and receiving a UHD video stream through HD video streams. In the case that a video stream with the first resolution is split into video streams with the second resolution, signaling information may be used to output the video stream with the first resolution or the video streams with the second resolution according to the capabilities of the receiver.

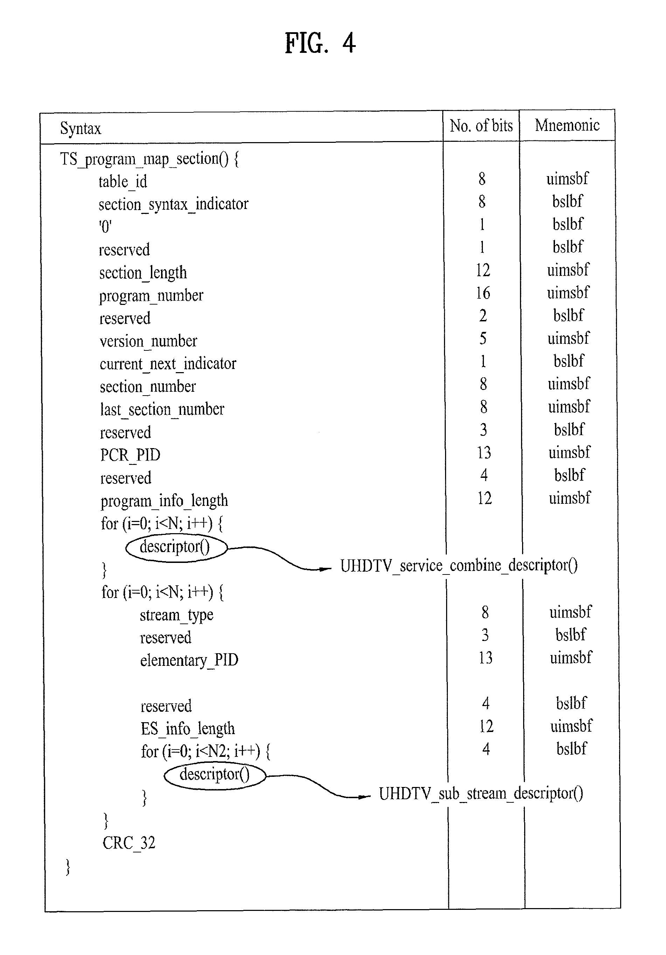

FIG. 4 exemplarily illustrates signaling information according to one embodiment of the present invention. The signaling information may be included in a descriptor describing each split video stream and may thus be included in the broadcast signaling information.

The descriptor may signal information about, for example, whether a stream is compatible with a HDTV, what sub-videos are include in the stream, what subsampling technique is used. In FIG. 4, a program map table (PMT) is shown as an example of the broadcast signaling information that includes the signaling information. Description of each field of the PMT may comply with ISO/IEC 13818-1 (MPEG-2 systems).

Herein, to identify the split streams, the stream_type may be 0x02 or 0x1B. To identify streams according to a high-performance codec that supports UHD videos such as UHD video streams, a separate value of the stream_type may be used.

In this example, to implement signaling of a UHD video stream or an HD video stream into which the UHD video stream is subsampled, a descriptor at the program level and a descriptor at the stream level may be used respectively.

In this embodiment, the descriptor at the program level (denoted by UHDTV_service_combine_descriptor), which is hereinafter referred to as a combine descriptor, may include, for example, signaling information for combining multiple HD video streams into one UHD video stream.

In this embodiment, the descriptor at the stream level (denoted by UHDTV_sub_stream_descriptor), which is hereinafter referred to as sub-stream descriptor, may include, for example, signaling information capable of describing the HD video streams respectively.

Hereinafter, two descriptors and the content signaled by the descriptors will be described. For ease of description of embodiments of the present invention, a sub-stream descriptor (denoted by UHDTV_sub_stream_descriptor) will first be described.

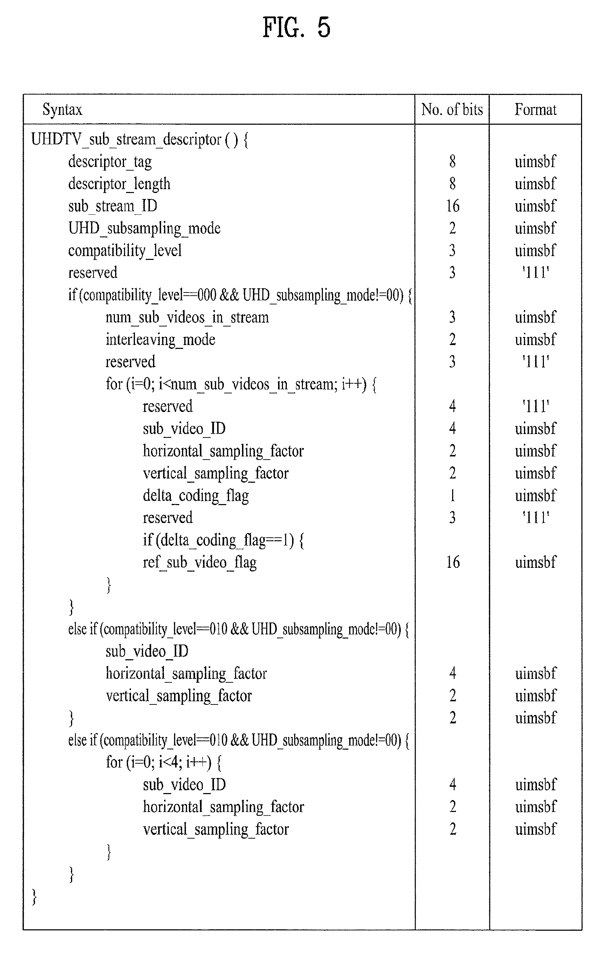

FIG. 5 is a view exemplarily illustrating a sub-stream descriptor in signaling information according to one embodiment of the present invention. The sub-stream represents an elementary video stream that can be independently transmitted.

The descriptor_tag field represents an identifier to identify this descriptor.

The descriptor_length field may represent the length of the descriptor in bits.

The sub_stream_ID field represents an ID value assigned to indentify each video stream included in a UHD video. The value may be sequentially assigned for each sub-stream, taking the upper leftmost pixel as a reference. For example, the reference pixel of a video stream positioned at the upper left side has a lower value than a pixel positioned at the lower right side in a UHD video.

The elementary stream_PID field, which represents an identifier of an elementary video stream, may serve as the sub_stream_ID field. For example, the sub_stream_ID field may be expressed in 2 bits for a 4K UHD video screen, while it may be expressed in 4 bits for an 8K UHD video screen.

The UHD_subsampling_mode field represents a technique of splitting the entire UHD video screen for transmission of a program/service containing a UHD video. This field may be included in the combine descriptor.

For example, if the UHD_subsampling_mode field is 00, this indicates that the described video stream may be implemented as one UHD video stream for implementation of a UHD program (service).

If the UHD_subsampling_mode field is 01, this may indicate that the described video stream is an HD stream obtained from the UHD program (service) using a subsampling technique compatible with an HD video stream, and that the subsampling technique is a technique of dividing a stream through line-by-line sampling (hereinafter, referred to as HD compatible sub-sampling). Accordingly, UHD_subsampling_mode field having 01 may indicate that at least one of the HD video streams produced by subsampling a UHD video is a stream compatible with a HD video.

If the UHD_subsampling_mode field is 10, this may indicate that the described video stream is produced with a technique of partitioning the screen of the illustrated UHD program (service) and transmitting each screen partition through a video stream (hereinafter, referred to as a sub-partition technique). That is, when a multivision device transmits a video stream for each section of the partitioned screen, the field may indicate the video stream.

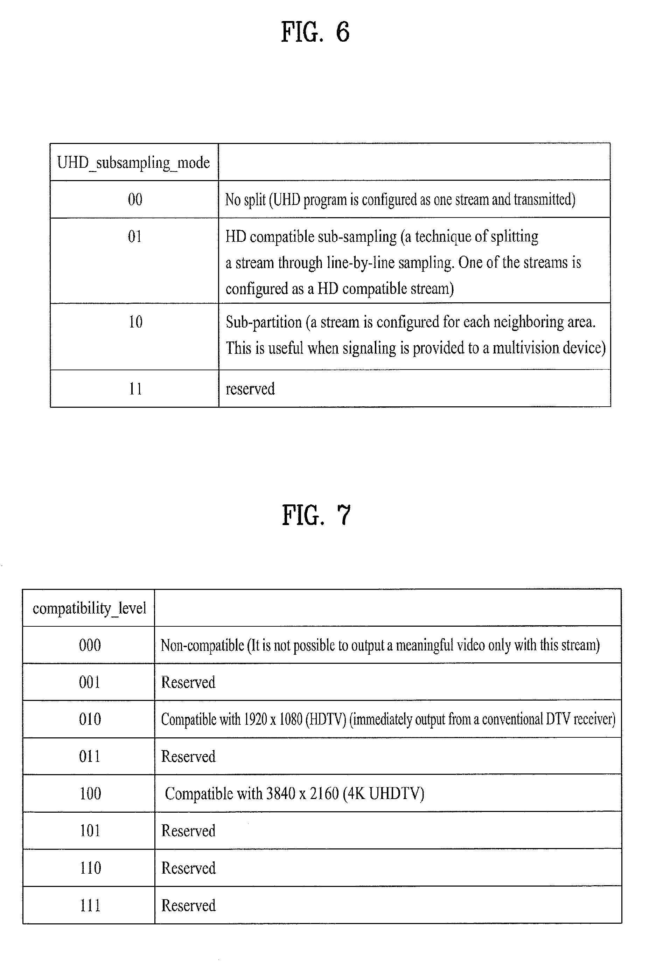

This field will be described in detail with reference to FIG. 6.

The compatibility_level field is a field representing compatibility of a stream contained in a UHD video. For example, in the case that a sub-stream split from a UHD video stream to implement a UHD video exists, the field may be used to define this sub-stream. Accordingly, in the case that a UHD video stream is transmitted through one stream, the value of this field may not be defined. If the field is, for example, 000, it may indicate a stream which is not compatible with the conventional HD stream. Accordingly, when compatibility_level field is 000, the receiver may determine, based on this field, that the stream is not viewable or is not a significant stream, and thus may not use the stream for the output video.

If compatibility_level field is 010, this may indicate that the stream is an HD video stream (e.g., a 1920 × 1080 stream) included in a UHD video stream.

If compatibility_level field is 100, this may indicate that the stream is an HD video stream (e.g., a 1920 × 1080 stream) included in a UHD video stream.

Herein, in the case that the receiver is a TV displaying a HD video stream for steams transmitted as shown in FIG. 1, the receiver may output an HD video stream when the compatibility_level field is 010. In this regard, exemplary values of the compatibility_level field are show in FIG. 7.

If the compatibility_level field is 000 and the UHD_subsampling_mode field is not 00, namely, if the video stream is non-compatiable with the conventional streams, and the technique is the HD compatible sub-sampling technique or sub-partition technique, the sub-stream descriptor may include fields exemplarily described below.

The num_sub_videos_in_stream field may indicate the number of sub-videos included in a steam for implementation of a video. That is, it may indicate the number of combinations of sampling factors in the horizontal and vertical directions of a frame of a video transmitted through the stream. This will be described in more detail later with reference to other drawings.

The interleaving_mode field is a field indicating how sub-videos will be disposed in a stream in the case that the steam carries multiple sub-videos in splitting and transmitting a UHD video. This field may be utilized when the receiver displays a decoded stream. This field has a meaning, which will be described in detail later with reference to other drawings.

The reserved field represents a field for reservation.

According to this embodiment, signaling information may further include the following fields for each sub-video depending on the num_sub_videos_in_stream field, that is, the number of sub-videos included in a video stream.

The sub-stream descriptor may include reserved field, sub_video_ID field, horizontal_sampling_factor field, vertical_sampling_factor field, and delta_coding_flag field according to the num_sub_videos_in_stream field.

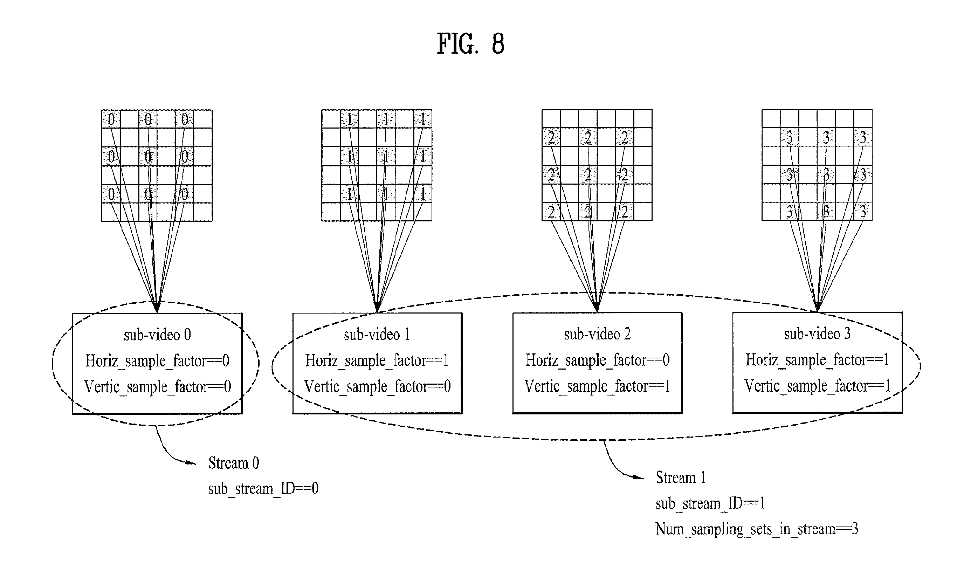

The sub_video_ID field may represent an identifier of a sub-video indlduced in a stream carrying a video to be implemented. For example, the sub_video_ID may represent an identifier assigned to identify HD frame-size sub-videos included in a UHD screen, which will be described in detail with reference to FIG. 8.

The horizontal_sampling_factor field is a field indicating a pixel or area sampled in a horizontal direction. The allocated number of bits varies depending upon the horizontal pixel value of the resolution of the original UHD screen (denoted by origianal_UHD_resolution). If the resolution of the original UHD screen is 3840 ×2160 (origianal_UHD_resolution==0), 1 bit may be allocated, and thus two values (an even-numbered line or an odd-numbered line) may be presented. If the resolution of the original UHD screen is 7680 ×4320 (origianal_UHD_resolution==1), 2 bits may be allocated, and thus four values (line No. 0 to line No. 3) may be presented.

The vertical_sampling_factor field is a field indicating a pixel or area sampled in a vertical direction. Similar to the horizontal_sampling_factor, if the resolution of the original UHD screen is 3840 ×2160 (origianal_UHD_resolution==0), 1 bit maybe allocated, and thus two values (an even-numbered line or an odd-numbered line) may be presented. If the resolution of the original UHD screen is 7680 ×4320 (origianal_UHD_resolution==1), 2 bits may be allocated, and thus four values may be presented.

The horizontal_sampling_factor field and vertical_sampling_factor field will be exemplarily described later with reference to the drawings.

The delta_coding_flag field is a flag indicating whether delta_coding is applied to the sub-video. In the case that the field has value '1', the flag indicates that delta_coding is applied.

The ref_sub_video_flag is a flag indicating other sub-videos that the sub-video references in delta_coding. The referenced sub-video may use '1' as the flag value of the corresponding position (the value of sub_video_ID), which will be described in detail later with reference to the drawings.

If the compatibility_level field described by the sub-stream descriptor is 010, and the UHD_subsampling_mode field is not 00, namely, if the video stream is a subsampled HD video stream compatible with the conventional HD stream, and the technique is a HD compatible subsampling technique or sub-partition technique, the sub-stream descriptor may include sub_video_ID field, horizontal_sampling_factor field and vertical_sampling_factor.

Similarly, if the compatibility_level field described by the sub-stream descriptor is 100 and UHD_subsampling_mode field is not 00, namely, if the video stream is a UHD video stream and the subsampling technique is an HD compatible sub-sampling technique or sub-partition technique, the sub-stream descriptor may include sub_video_ID field, horizontal_sampling_factor field, and vertical_sampling_factor.

FIG. 8 is a view illustrating an example of allocation of a sub-video to a sub-stream to provide a description of the num_sub_videos_in_stream field. As described above, this field may indicate the number of sub-videos included in a stream. In the case that a UHD video stream is split and thus multiple video streams thereof are transmitted, each of the video streams may include at least one sub-video datum.

When a value is assigned to each HD video, i.e., each sub-video split from the UHD screen, the value may be sequentially assigned for each sub-video, taking the upper leftmost pixel as a reference. In this example, the reference pixel of a video stream positioned at the upper left side has a lower value than a pixel positioned at the lower right side in a UHD video.

A sub-video is a video screen that is produced by collecting the pixels belonging to the same sample grid in performing subsampling for each quartet or group of 16 pixels. A sub-stream carrying one or more sub-videos may be transmitted.

In the illustrated example, in the case of $2\times2$ pixels in a UHD screen, if UHD_sampling_mode is 01, a screen of upper left pixels is defined as sub-video 1, a screen of upper right pixels is defined as sub-video 2, a screen of lower left pixels is defined as sub-video 3, and a screen of lower right pixels is defined as sub-video 4.

Each sub-video can be expressed in a combination of horizontal_sampling_factor and vertical_sampling_factor as follows.

In the illustrated example, for sub-video 0, horizontal_sampling_factor may be 0, and vertical_sampling_factor may be 0. For sub-video 1, horizontal_sampling_factor may be 1, and vertical_sampling_factor may be 0. For sub-video 2, horizontal_sampling_factor may be 0, and vertical_sampling_factor may be 1. For sub-video 3, horizontal_sampling_factor may be 1, and vertical_sampling_factor may be 1.

In addition, the sub-stream may transmit video data for at least one sub-video.

In the illustrated example, sub-video 0 may be transmitted through a stream having a sub-stream identifier set to 0, and sub-videos 1, 2 and 3 may be transmitted through a stream having a sub-stream identifier set to 1. In this case, num_sub_videos_in_stream is 3 for the stream having the sub-stream identifier set to 1.

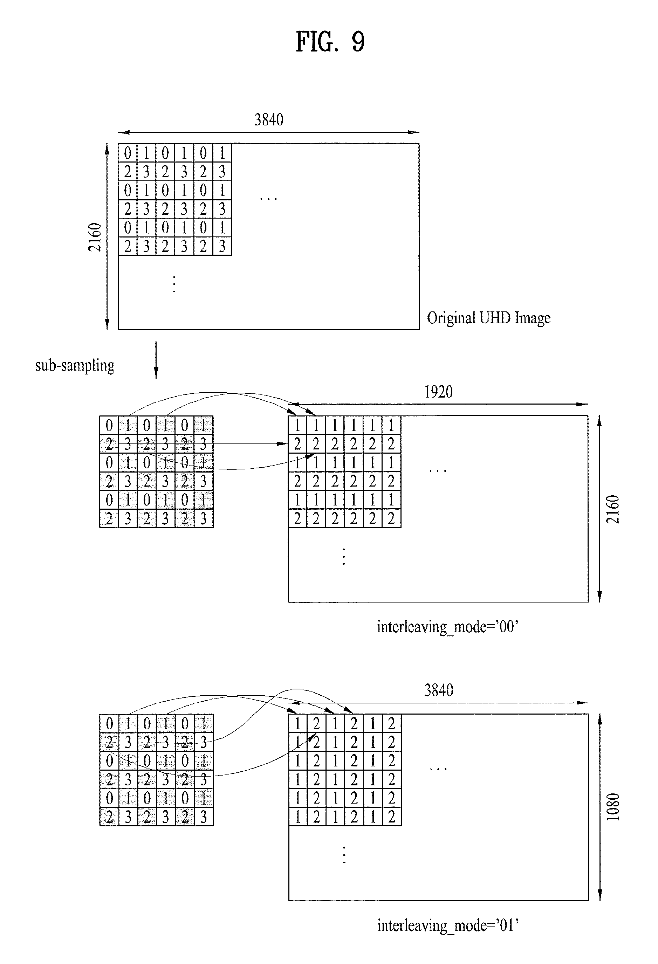

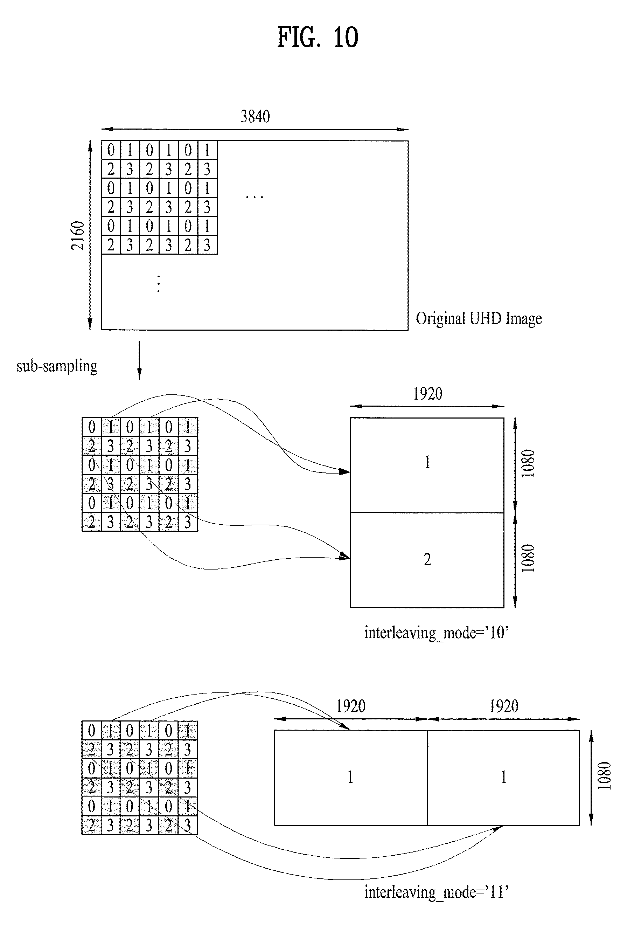

FIGs. 9 and 10 are views exemplarily illustrating a interleaving mode in signaling information according to one embodiment of the present invention. The interleaving mode may indicate how multiple sub-videos will be disposed in a stream in the case that the steam carries sub-videos in splitting and transmitting a UHD video.

FIGs. 9 and 10 are views illustrating an example of transmitting sub-video 1 and sub-video 2 through a stream in the case of subsampling a 3840x2160 UHD screen with UHD_subsampling_mode set to 01. FIG. 9 illustrates a case in which interleaving_mode is 00 and 01, and FIG. 10 illustrates a case in which interleaving_mode is 10 and 11.

The case of interleaving_mode being set to 00 is referred to as raster scan order. In this interleaving mode, pixels for which subsampling is performed may be arranged based on the positions thereof in an original UHD video. The raster scan order represents an example of disposing pixels of sub-video 1 and sub-video 2 line by line for a $1920\times2160$ HD service video and transmitting the same.

The case of interleaving_mode being set to 01 is referred to as group-of-pixel-based order. In this mode, pixels for which subsampling is performed may be arranged in the smallest unit (e.g., $2\times2$ or $4\times4$ pixels) to form a sub-stream. The group-of-pixel-based order represents an example of alternately disposing the pixels of sub-video 1 and the pixels of sub-video 2 in each line of a 1920x2160 HD service video and transmitting the same.

FIG. 10 illustrates the cases of interleaving_mode being set to 10 and 11.

The case of interleaving_mode being set to 10 is referred to as vertical frame stack. In this mode, pixels included a sub-video are disposed in order of sub_video_id in a vertical direction. Accordingly, in this case, the vertical frame stack represents an example of transmitting sub-video 1 and sub-video 2 with sub-video 1 positioned at the vertically upper portion of a $1920\times2160$ HD sub-video and sub-video 2 positioned at the lower portion of the $1920\times2160$ HD service video.

The case of interleaving_mode being set to 11 is referred to as horizontal frame stack. In this mode, the pixels included in a sub-video are in order of sub_video_id in a horizontal direction. Accordingly, in this case, the horizontal frame stack represents an example of transmitting sub-video 1 and sub-video 2 with sub-video 1 positioned at the left side of a $2160\times1920$ HD sub-video, and sub-video 2 positioned at the right side of the 2160x1920 HD sub-video.

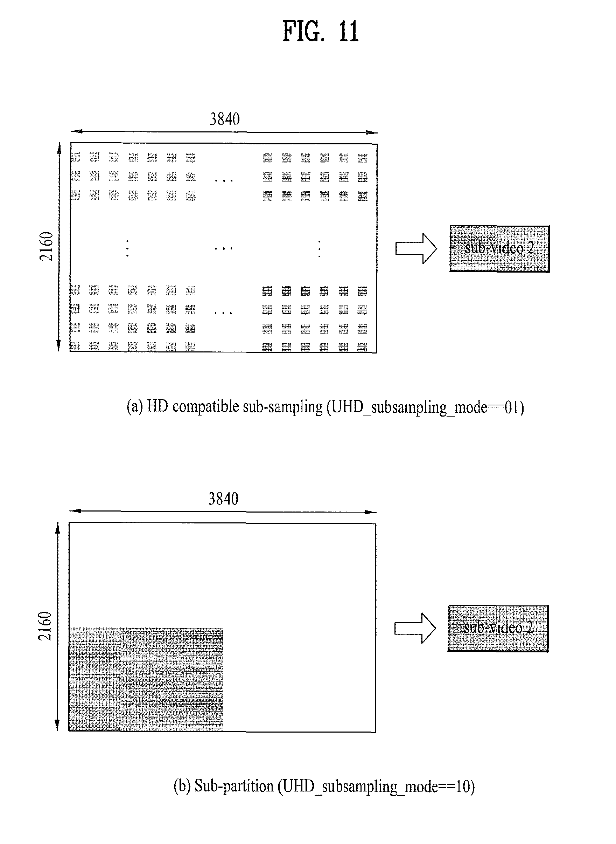

FIG. 11 is a view illustrating a simplified example of a sampling factor. Hereinafter, the sampling factor will be described with reference to FIG. 11.

FIG. 11(a) illustrates extracting sub-video 2 from a UHD screen when UHD_subsampling_mode is 01 (i.e., HD compatible sub-sampling), horizontal_sampling_factor is 0, and vertical_sampling_factor is 1. In this case, the lower left pixels of UHD screen may be extracted as sub-video 2 in a reference unit of $2\times2$ pixels.

FIG. 11(b) illustrates extracting video 2 from the UHD screen when UHD_subsampling_mode is 10 (i.e., sub-partition), horizontal_sampling_factor is 0, and vertical_sampling_factor is 1. In this case, 1/4 of the entire UHD screen at the lower left end of the screen may be extracted as sub-video 2.

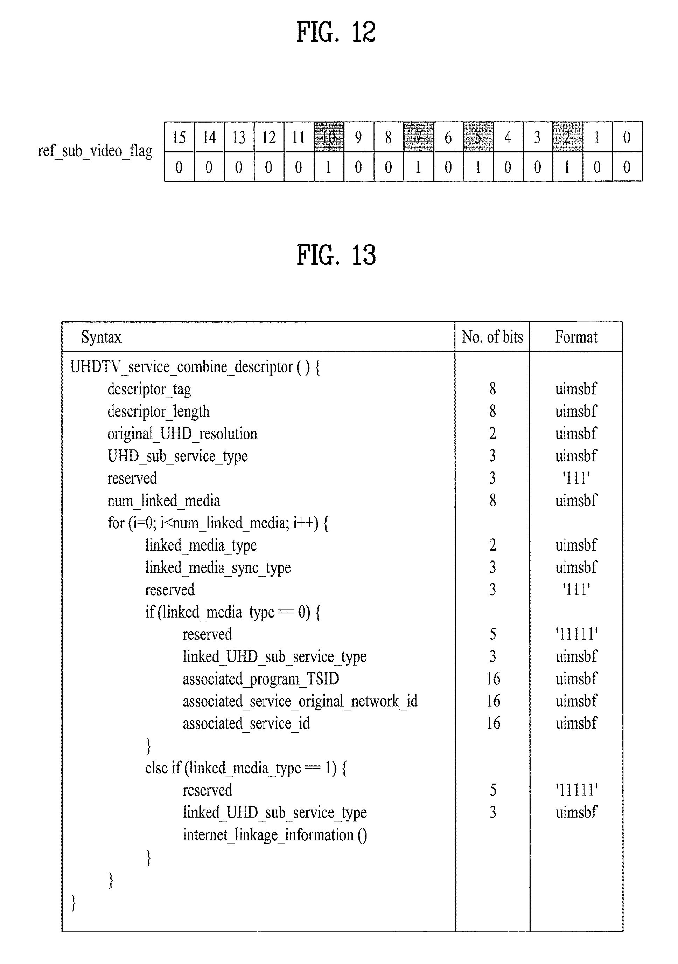

FIG. 12 is a view exemplarily illustrating the ref_sub_video_flag field, which may be included in the signaling information. As described above, the ref_sub_video_flag field is a flag indicating other sub-videos that the sub-video references in delta_coding. The referenced sub-video set the flag of the corresponding position (the value of sub_video_ID) to 1. FIG. 12 illustrates the case of the UHD screen having a size 4 times as large as that of the HD screen and including 16 sub-videos, in which the referenced sub-videos are sub-videos 2, 5, 7, and 10. In FIG. 12, each bit position may indicate whether a corresponding sub-video has been referenced.

In the above, the sub-stream descriptor and information that may be included in the sub-stream descriptor have been described. The sub-stream descriptor may be described for each stream as a descriptor. In this case, the receiver may know information such as the compatibility of each stream and sampling factors, but may not know the information about the entire configuration of the original UHD broadcast. Therefore, information about a UHD video may be signaled at the program, channel or service level to provide the UHD broadcast. In addition, to combine the respective streams, the information may include the number of sub-video streams included in a program, a channel or a service, channel or service information including each sub-video stream, and an indication of whether each sub-video stream is transmitted in real time or non-real time.

Hereinafter, a description will be given of signaling information for indicating UHD video components in a UHD video or HD video in the case that the UHD video components are transmitted over at least one broadcast channel or a physical channel different from the broadcast channel according to the illustrated embodiment. In the case that UHD video components are transmitted over different channels, operation of the receiver may vary depending upon whether or not the UHD video components supported by the channels are synchronized. Hereinafter, an embodiment of signaling information and operation of the receiver for this case will be described.

UHD video components or UHD sub-services may be output into a UHD screen in real time upon being synchronized and received, or a portion or entirety thereof may be asynchronous stored in the receiver, and then may be combined with the transmitted UHD video components and output later.

FIG. 13 is a view exemplarily illustrating a combine descriptor according to one embodiment of the present invention. In FIG. 13, the combine descriptor is denoted by UHDTV_service_combine_descriptor. Hereinafter, a description will be given of the combine descriptor with reference to FIG. 13.

UHDTV_service_combine_descriptor may include fields as follows.

The descriptor_tag field may indicate an identifier of the descriptor at the program level, and the descriptor_length field may indicate the length of UHDTV_servicc_combine_descriptor.

The original_UHD_resolution field represents the resolution of an original UHD screen that may be output by collecting all the streams included in a UHD program (service). An exemplary description of a value of the original_UHD_resolution field will be given later with reference to the drawings.

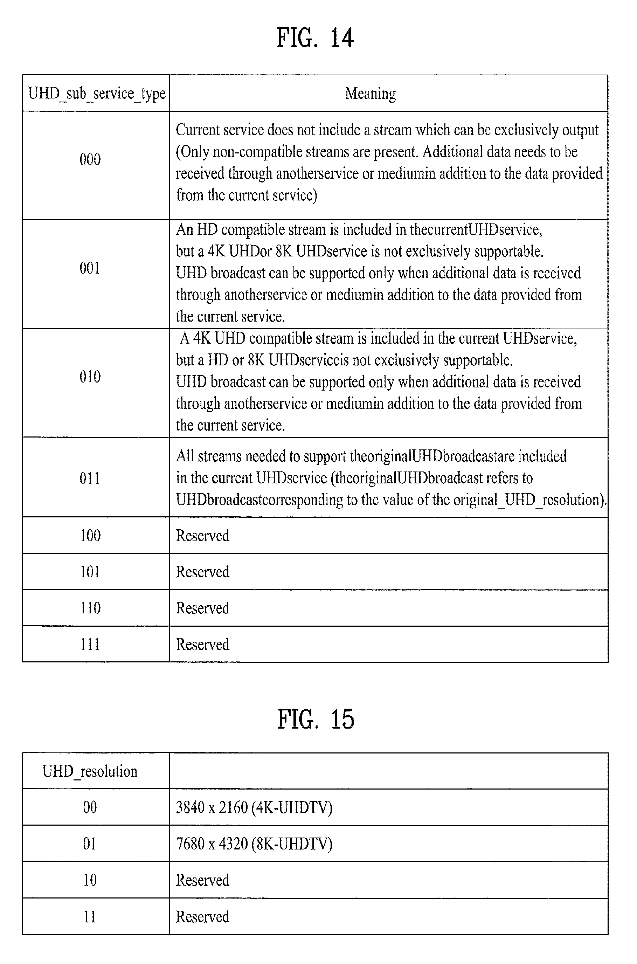

The UHD_sub_service_type field may indicate types of sub-services which can be supported only with steams described at the current program (service and channel) level. Details of the value of this field will be described later with reference to FIG. 14.

The linked_UHD_sub_service_type field may indicate the UHD_sub_service_type value of a service associated with the current program (service and channel).

The num_linked_media field may indicate the number of associated media provided through other services or media other than the current delivery medium to implement the original UHDTV broadcast.

The linked_media_type field may indicate the types of associated media. If the field is 00, the field may indicate that information associated with a program (service) to be currently described is transmitted to other services, channels, or programs in the same broadcast transmission medium. If linked_media_type is 01, it may indicate that information associated with a program (service) to be currently described can be transmitted through another transmission medium such as Internet.

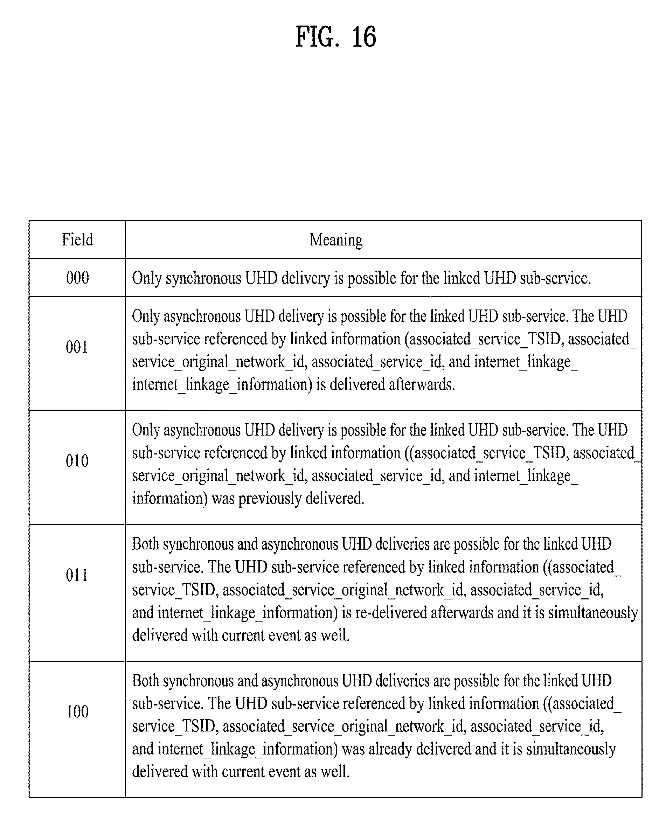

The Linked_media_sync_type field may indicate how a UHD sub-service to be connected is acquired and synchronized by the receiver. This field will be described in detail with reference to FIG. 16.

In the cast that an associated stream included in a UHD stream is transmitted through the same medium (linked_media_type == 0), the combine descriptor may include Linked_UHD_sub_service_type, associated_service_TSID, associated_service_original_network_id, and associated_service_id. In the cast that an associated stream included in the UHD stream is transmitted through another medium (linked_media_type == 1), the combine descriptor may include Linked_UHD_sub_service_type, and intemet_linkage_information().

The associated_service_TSID field may indicate the value of transport_stream_id of a program (service) including a stream to be combined with the program (service) which the descriptor is describing to provide a compete UHD service.

The associated_service_original_network_id field may indicate the value of original_network_id of a service including a stream to be combined with the program (service) which the descriptor is describing to provide a compete UHD service.

The associated_service_id field may indicate the value of service_id of a service including a stream to be combined with the program (service) which the descriptor is describing to provide a compete UHD service.

While the combine descriptor is illustrated in this embodiment as including service_id, it may include the linked_program_number field. In this case, the linked_program_number field has a meaning similar to that of the program_number field of the PMT, and identify the program number for a stream which can be combined..

Internet_linkage_information indicates connection information about Internet connected to provide a complete UHD program (service). The information may include at least one of (1) whether the IP address information is 32 bits or 128 bits, (2) IP address information, (3) Port number information, (4) additional information such as URI for an additional stream, and (5) available time slot (e.g., start time, expiration time, etc. for transmission of a service).

FIG. 14 is a view exemplarily illustrating values of the UHD_sub_service_type. As described above, in the combine descriptor, the values of the UHD_sub_service_type field may indicate types of sub-services which can be supported only with a service according to a steam currently being described.

For example, if the UHD_sub_service_type field is 000, it may indicate that a stream that can be exclusively output is not present in the current. That is, this field may indicate that only non-compatible streams are present in the currently described stream, and additional data may be received through another service or medium in addition to the currently described service (program) for the UHD service.

If the UHD_sub_service_type field is 001, it may indicate that an HD compatible stream is included in the currently described UHD service, but a 4K UHD or 8K UHD service is not exclusively supportable. Accordingly, it may indicate that additional data may be received through another service or medium in addition to the data provided from the service (program) currently described for the UHD service.

If the UHD_sub_service_type field is 010, it may indicate that a 4K UHD compatible stream is included in the currently described UHD service, but a HD or 8K UHD service is not exclusively supportable. Accordingly, it may indicate that additional data may be received through another service or medium in addition to the data provided from the service (program) currently described for the UHD service.

If the UHD_sub_service_type field is 011, it may indicate that all streams needed to support the original UHD broadcast are included in the currently described UHD service. Herein, the original UHD broadcast refers to a UHD broadcast corresponding to the value of the original_UHD_resolution.

FIG. 15 is a view exemplarily illustrating values of the original_UHD_resolution field described above.

If the original_UHD_resolution field is 00, it may indicate a 4k UHD resolution of 3840x2160. If the original_UHD_resolution field is 01, it may indicate a 4k UHD resolution of $7680 \times 4320$. FIG. 15 illustrates the values of the original_UHD_resolution field. Although not illustrated in FIG. 15, a screen format of a $4096 \times 2160$ resolution may also be signaled to a value of the original_UHD_resolution field. In this case, crop rectangle-related parameters (frame_crop_left_offset, frame_crop_right_offset, frame_crop_top_offset, frame_crop_bottom_offset, etc.) may be additionally used in the process of video encoding of a stream for HD compatibility. At this time, the video decoder may set the output data to $1920 \times 1080$ or may configure a HD compatible video signal using bar data.

FIG. 16 is a view exemplarily illustrating values of the Linked_media_sync_type field described above. This field describes how a linked UHD sub-video can be obtained. As illustrated in FIG. 16, a sub-stream or sub-video may be a video component for a UHD service. In addition, the sub-stream or sub-video may be transmitted using at least one broadcast channel, or may be transmitted through at least one broadcast channel and another physical medium.

For example, a first sub-stream may be transmitted over a terrestrial broadcast channel, and second, third and fourth sub-streams may be transmitted over an IP stream on the Internet. Accordingly, when video components are transmitted over a separate transmission means, it may be indicated how they can be synchronized through signaling..

Therefore, synchronous delivery represents the case of transmission of two or more components in real time. In this case, the two or more components are synchronized and expressed by the receiver. Asynchronous delivery represents the case of transmission of any one of the components in non-real time. In this case, the receiver pre-stores a first component, and receives another component transmitted thereafter. Then, the receiver synchronizes and expresses both components.

For example, in the case that the value of the Linked_media_sync_type field is 000, it indicates that only synchronous UHD delivery is available for the linked UHD sub-streams (services). Accordingly, in this case, the linked UHD sub-streams (services) may be transmitted in real time, and synchronized with each other to express the UHD services.

If the value of the Linked_media_sync_type field is 001, it indicates that asynchronous UHD delivery is available for the linked UHD sub-streams (services), and the UHD sub-streams (services) referenced by the link information (e.g., associated_service_TSID, associated_service_original_network_id, associated_service_id, internet_linkage_information, etc.) is transmitted thereafter. Accordingly, in this case, the linked UHD sub-streams (services) may be transmitted in non-real time, and when the receiver receives the link information, it may synchronize the UHD sub-streams (services) transmitted in non-real time with each other and express the UHD services.

If the value of the Linked_media_sync_type field is 010, it indicates that asynchronous UHD delivery is available for the linked UHD sub-streams (services), and the UHD sub-streams (services) referenced by the link information (e.g., associated_service_TSID,associated_service_original_network_id, associated_service_id, internet_linkage_information, etc.) has already been transmitted. Accordingly, in this case, the linked UHD sub-streams (services) may have already been transmitted in non-real time, and the receiver may synchronize the UHD sub-streams (services) transmitted at different points of time using the link information and express the UHD service.

If the value of the Linked_media_sync_type field is 011, it indicates that both the synchronous UHD delivery and the asynchronous UHD delivery) are available for the linked UHD sub-streams (services), and that the UHD sub-streams (services) referenced by the link information (e.g., associated_service_TSID, associated_service_original_network_id, associated_service_id, internet_linkage_information, etc.) is retransmitted later or is being transmitted upon occurrence of the current event.

If the value of the Linked_media_sync_type field is 100, it indicates that both the synchronous UHD delivery and the asynchronous UHD delivery) are available for the linked UHD sub-streams (services), and that the UHD sub-streams (services) referenced by the link information (e.g., associated_service_TSID, associated_service_original_network_id, associated_service_id, internet_linkage_information, etc.) has already been transmitted and is being transmitted upon occurrence of the current event.

The combine descriptor and the sub-stream descriptor have been exemplarily described above. Information that can be included in each descriptor has also been described. The sub-stream descriptor may include a descriptor for each stream. In this case, information such as the compatibility of each stream and sampling factors may be known, but the information about the entire configuration of the original UHD broadcast is not provided. Accordingly, information about the entire configuration of the UHDTV broadcast, which needs to be provided at the program/channel/service level, may be signaled to provide the UHD broadcast. The information may include the number of constituent streams, channel/service information including each stream, and an indication of whether each stream is transmitted in real time or non-real time, which have been already disclosed with regard to the combine descriptor.

Since operation of the receiver may vary depending upon whether or not the UHD sub-services provided over the channels are synchronized, this is considered in signaling in the embodiments of the present invention. That is, the UHD sub-services may be all synchronized and output in real time upon being received, or they may be asynchronously configured and a portion or entirety thereof may be stored in the receiver and then output when combined with components transmitted later.

Next, a description will be given of a format of a video stream in the case that a UHD video is transmitted according to the method exemplarily described above. Once subsampling of a UHD video is performed, the video encoder may encode the subsampled video into the elementary video streams according the following format and then output the encoded video.

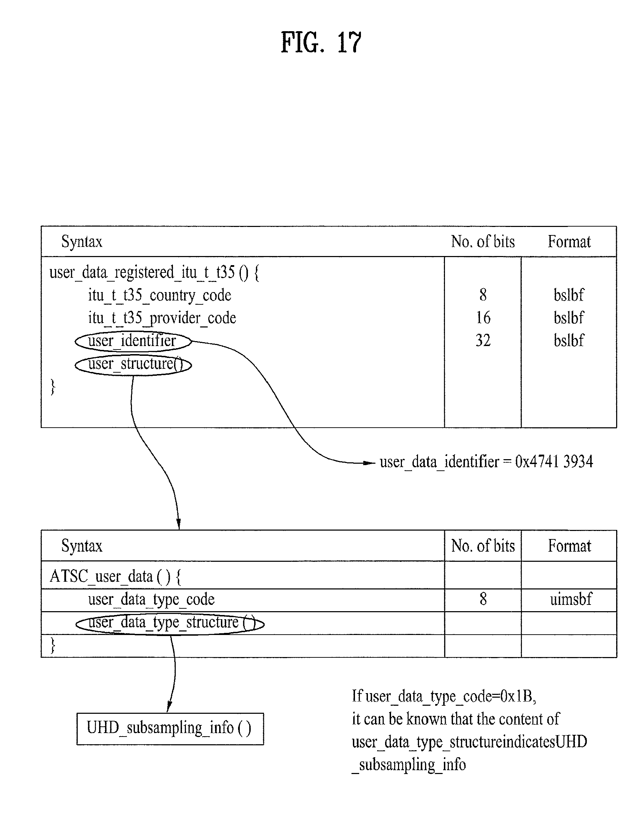

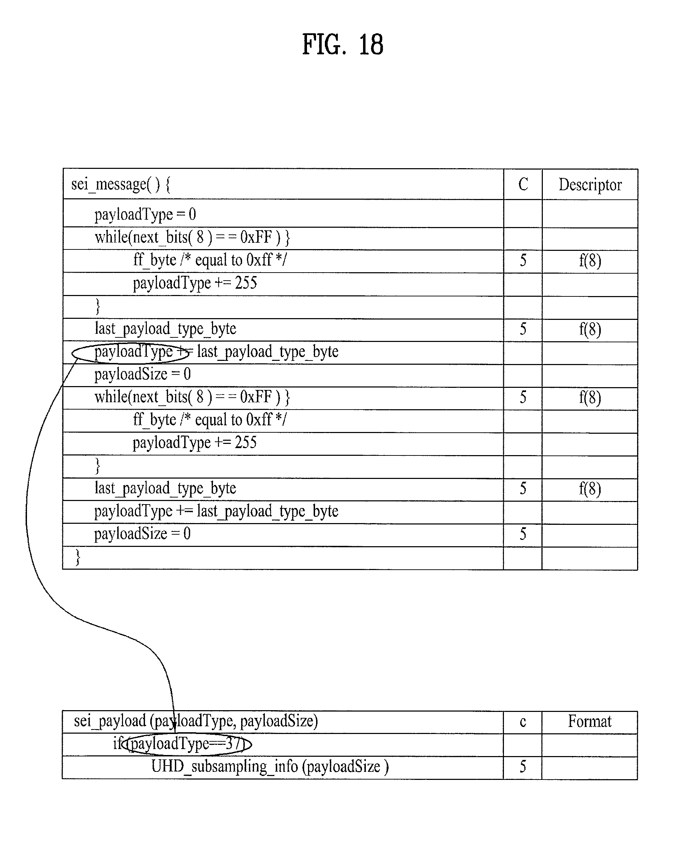

First, the header of the elementary video streams described above may have a format of a supplemental enhancement information (SEI) message illustrated in FIGs. 17 and 18.

FIG. 17 illustrates the format of a supplemental enhancement information (SEI) payload of an elementary video stream. In the case that the payload type of the SEI payload is 5, a payload format according to user_data_registered_itu_t_t35() may be provided.

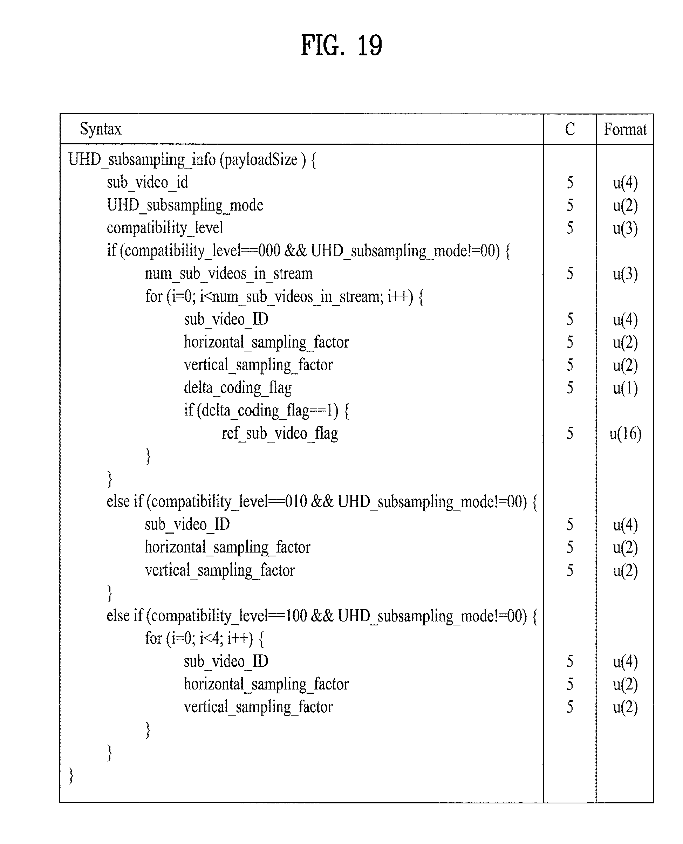

Herein, the user_identitier field may have a value of 0x4741 3934, the user_structure field may have a format exemplarily described below. In addition, in the case that user_data_type_code is 0x1B, user_data_type_structure() may contain information of UHD_sampling_info which describes sub-streams according to the technique of subsampling of the UHD video. The content of UHD_sampling_info will be described in detail with reference to FIG. 19.

FIG. 18 is a view exemplarily illustrating a format of the SEI message of an elementary video stream. In the case that payloadType of the SEI message is 37, sampling informaty (UHD_sampling_info) may be contained.

FIG. 19 is a view exemplarily illustrating sampling information according to a technique of subsampling of a UHD video in an elementary video stream. Herein, fields in the syntax of the described sampling information (UHD_sampling_info) identical to those of FIG. 5 have the same meaning as those of the fields described above with reference to FIG. 5.

A description has been given above of an example of the combine descriptor and the sub-stream descriptor being included in the PMT. However, the illustrated descriptors may be added to VCT of ATSC PSIP. At this time, both the combine descriptor and the sub-stream descriptor illustrated above may be included a description at the channel level.

For example, in the case that the combine descriptor (UHDTV_service_combine_descriptor) is included in the TVCT, the combine descriptor (UHDTV_service_combine_descriptor) may be located at the position of a channel loop. In this case, associated_service_id in the combine descriptor (UHDTV_service_combine_descriptor) may be replaced with associated_program_number or associated_major_channel_number and associated_minor_channel_number. In addition, a described program (service) and an identifier (associated_source_id) of a related source which can express the program into a UHD video may be added to the combine descriptor (UHDTV_service_combine_descriptor).

The associated_program_number field indicates a program number for a service video stream associated with a signaled sub-video stream, and the associated_major_channel_number field and the associated_minor_channel_number field respectively indicate major and minor channel numbers for a service video stream related to the signaled sub-video stream. In addition, the associated_source_id field may indicate the channel number or source_id of a channel containing a stream to be combined. Since the combine descriptor (UHDTV_service_combine_descriptor) has been described, a replaced or added field is omitted in the drawings.

The two descriptors described above may be added to the SDT of the DVB SI. In this case, both the combine descriptor and the sub-stream descriptor described above may be included in a descriptor at the service level.

In another example, the combine descriptor (UHDTV_service_combine_descriptor) described above may be included at the position of transport_stream_loop in Network Information Table. In this case, the receiver may obtain, using the combine descriptor (UHDTV_service_combine_descriptor) of the NIT, information about, for example, how a service to be described is transmitted over a stream obtained from an original UHD video, from the fields such as trasnport_stream_id and original_network_id. In addition, the receiver may obtain information about, for example, whether the service received from the combine descriptor (UHDTV_service_combine_descriptor) of the NIT is a stream which can be exclusively output stream and which sub-video it includes. The receiver may also know information about a service to be additionally connected to obtain a complete UHD video, using the descriptor.

In another example, the exemplary UHD video may be included in the Event Information Table (EIT) of the ATSC or the DVB. The combine descriptor (UHDTV_service_combine_descriptor) described above may be included in the position of the event loop in Event Information Table.

In the case that the combine descriptor (UHDTV_service_combine_descriptor) is transmitted to the EIT of the ATSC, the associated_service_id field of the combine descriptor described above may be replaced with the associated_program_number field which identifies a program associated with expression of a UHD video, or the associated_source_id field to identify a source associated with expression of the UHD video and the theassociated_event_id field to identify an event associated with expression of the UHD video may be added to the combine descriptor. The associated_program_number indicates a program number for a service video stream associated with a signaled sub-video stream as exemplarily described above. The associated_source_id field and the associated_event_id field respectively indicate a source ID of a video steam associated with the signaled sub-video stream and an event identifier. In the case of the DVB, the associated_event_id field to identify an event associated with expression of a UHD video may be added to the combine descriptor.

When a UHD video stream is transmitted, signaling information additionally containing the following fields according to a transmission system may be transmitted as well.

According to a transmission system, the signaling information may include component type information or stream_type information. Signaling using the component type information may inform the type of each stream through the values of the stream_content field and the component_type field. Accordingly, using a component value of a stream, a value allowing determination of the UHD_subsampling mode, codec information, resolution information may be allocated and signaled.

Even in the case that the stream_type information is used, a new value for the UHD video stream may be allocated and signaled. UHD services may be classified according to a codec used and the type of a contained stream and signaled by allocating a different service_type to each classified UHD stream. In this case, a service according to the subsmapled HD video compatible streams from the UHD services may use the same service_type as the conventional HD service allow watching through the conventional HD service.

In addition, the conventional receiver may be blocked from receiving a UHD video signal which is compatible with the HD video by providing signaling using the component type and stream_type or service_type.

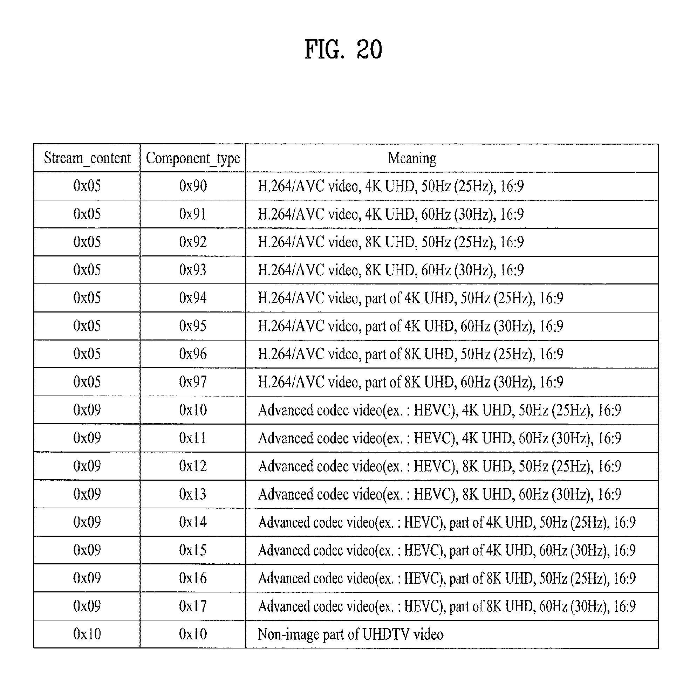

FIG. 20 is a view exemplarily illustrating identifying UHD content using stream_content and component_type in a DVB system. In the DVB system, the component descriptor may identify the type of a component stream, and may be used to provide a description of texts of elementary streams. The component descriptor may be included in the EIT or SDT, and thus may describe the features of video elements included in an event or a service.

In this case, types of sub-content that may be included in UHD content, as shown in FIG. 20, may be signaled. The sub-content is produced using the UHD content. It may be compatible with the UHD content or not. For example, components illustrated in FIG. 20 may transmit the sub-videos illustrated in FIG. 1. In this case, the elements such as the sub-video sampling factor (e.g., (even, odd)), the horizontal_sampling_factor and the vertical_sampling_factor may also be used to describe each component.

For example, if stream_content is 0x05 and component_type is 0x90, the corresponding sub-content may be 4K UHD content as H.264/AVC video content, and may represent content having 50Hz (25Hz) and aspect ratio of 16:9.

If stream_content is 0x05 and component_type is 0x94, the corresponding sub-content may be part of 4K UHD content as H.264/AVC video content, and may represent content having 60Hz (30Hz) and aspect ratio of 16:9.

Herein, part of 4K UHD indicates the case in which that sub-video data of part of the 4K UHD content is included, but an independently meaningful video (e.g., HD video) cannot be provided. In the above description, components having aspect ratio of 16:9 have been provided as an example. In the case that the aspect ratio different from 16:9 (e.g., 21:9) is given, component_type for this ration may be additionally set. For example, if stream_content is 0x05 and component_type is 0x98, the sub-content may represent a component of H.264/AVC video, 4K UHD, 50Hz (25Hz), and aspect ratio of 21:9.

In the case that the component is encoded using Spatial Scalable Coding and transmitted, the base layer use the same method as in the conventional HD, and values of stream_content and component_type may be separately allocated for the enhancement layer to provide Spatial Scalability. For example, if stream_content is 0x05 and component_type is 0xA0, it indicates H.264/AVC Spatial Scalable Extension Video, 4K UHD, 50Hz (25Hz), and 16:9. This stream cannot be independently decoded, but may output a meaningful video when combined with a base layer video. Further, in the case that Advanced Codec is used, a UHD video may be provided with a method similar to that describe above if spatial scalability is provided based on this codec.

Hereinafter, additional embodiments of the implementable signaling information will be described, and then a description will be given of operation of the receiver that outputs a UHD video or a HD video using the UHD video streams and the signaling information transmitted according to the method described above.

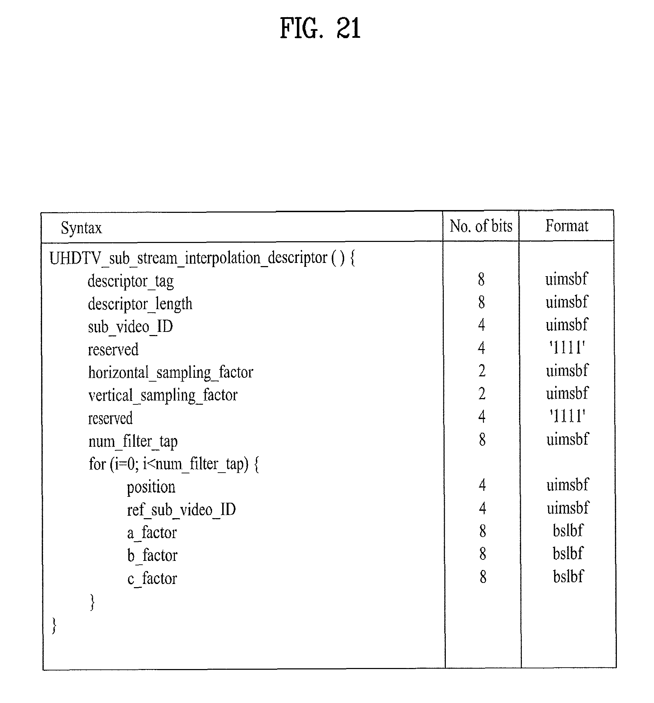

In the case that HD video is sampled from the UHD video and thus a sub-video thereof is transmitted, the video data may be restored using interpolation in which other sub-video data rather than the vide data is used. In this case, the sub-stream descriptor may contain information as shown in FIG. 21.

FIG. 21 is a view exemplarily illustrating another embodiment of the sub-stream descriptor. When sub_video is transmitted for some sample grids among the entire configuration elements of the UHDTV (a sub-video is produced when all the pixels included in a specific sample grid are combined), a filter factor may be transmitted such that the video data is restored using the interpolation technique based on other sub_video data rather than on the video data.

When a stream is transmitted using the interpolation technique, the signaling information for the stream may include fields as follows.

The descriptor_tag field indicates an identifier to identify the descriptor.

The descriptor_length field may indicate the length in bits of the descriptor.

The sub_stream_ID field indicates an ID value assigned to identify each video stream included in a UHD video. The values may be sequentially assigned for each sub-stream (sub_stream), taking the upper leftmost pixel as a reference. For example, in each video stream, the reference pixel may have a smaller value when it is positioned further to the upper left side in a UHD video.

The elementary stream_PID field indicating the identifier of a stream included in a video may serve as the sub_stream_ID field. For example, in the case of a 4K UHD video screen, the sub_stream_ID field may be expressed in 2 bits. In the case of a 8K UHD UHD video screen, the sub_stream_ID field may be expressed in 4 bits. As described above, the sub-stream may represent a video elementary stream which is independently coded.

The horizontal_sampling_factor field is a field indicating a pixel or area sampled in a horizontal direction. The allocate number of bits varies depending on the horizontal pixel value of UHD_resolution. If origianal_UHD_resolution==0, 1 bit is allocated, and thus two values (an even-numbered line or an odd-numbered line) may be presented. If original_UHD_resolution==1, and thus four values (line No. 0 to line No. 3) may be presented

The vertical_sampling_factor field is a field indicating a pixel or area sampled in a vertical direction. Similar to the horizontal_sampling_factor, if original_UHD_resolution==0, 1 bit may be allocated, and thus two values (an even-numbered line or an odd-numbered line) may be presented. If original_UHD_resolution==1, 2 bits may be allocated, and thus four values may be presented.

The horizontal_sampling_factor field and vertical_sampling_factor field function as described above.

The num_filter_tap field may indicate the number of reference pixels or the filter size that is used in the process of calculation when the sub_video is restored using interpolation.

The ref_sub_video_ID field may indicate the sub_video to which reference pixels used to restore the sub_video through interpolation belong. In the interpolation process, a stream containing sub-videos is decoded and ultimately a UHD screen is expressed for display. Since each sampling grid (horizontal/vertical sampling factor) of each referenced sub_video has already been acquired by the associated UHDTV_sub_stream_descriptor, pixels to be used can be sufficiently known from ref_sub_video_ID.

The position field may indicate whether pixels to be referenced (pixels included in ref_sub_video_ID) are included in the same quartet or group of pixels. If value of the position field is 0x0, it may indicate the same quartet (or group of pixels). If the value of the position field 0x1, it may indicate a right neighboring quartet (or group of pixel). If the value of the position field is 0x2, it may indicate the left neighboring quartet (or group of pixel). If the value of the position field is 0x03, it may indicate the upper neighboring quartet (or group of pixel). If the value of the position field is 0x04, it may indicate the lower neighboring quartet (or group of pixel).

The a_factor field, b_factor field and the c_factor field respectively indicate values of factors that can reconstruct a field to be restored from the referenced sub-video pixels. For example the pixels to be reconstructed may be reconstructed according to an equation given below.

Equation 1

$$\text{reconstructed\_pixel\_for\_sub\_video\_ID} = (\text{a\_factor} / \text{b\_factor}) *$$

$$\text{pixel\_from\_ref\_sub\_video\_ID} + \text{c\_factor}$$

Herein, reconstructed_pixel_for_sub_video_ID indicates a value of a pixel reconstructed from a sub-video, and pixel_from_ref_sub_video_ID indicates a value of a pixel referenced to reconstruct a service video.

Hereinafter, an example of restoration of pixels of a video will be disclosed.

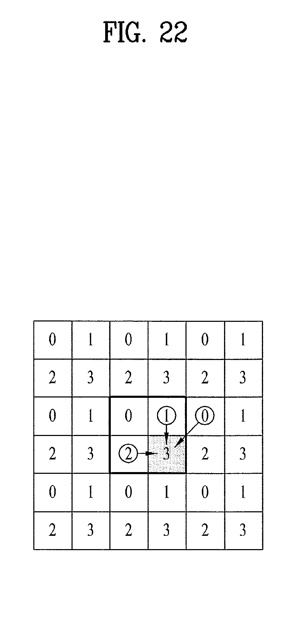

FIG. 22 is a view illustrating an example of restoration of video pixels using a reference video pixel according to the signaling information described above. In this example, it will be assumed that the 2x2 pixels are in the same group.

In FIG. 22, the numbers identify pixels of a sub-video included in the same group. The numbers will be indicated by i. In this figure, an example of restoring pixels of Sub_video 3 using interpolation is illustrated, and reference pixels to be used in restoration are denoted with a circle.

In the case that a pixel is restored using an average value of three reference pixels, Number_of_filter_tap, position, ref_sub_video_ID, a_factor, b_factor and c_factor of UHDTV_sub_stream_interpolation_descriptor are given values as follows.

First, the number_of_filter_tap field is 3 since threes pixel values are used to restore one pixel.

When i = 0 (pixels of sub_video 0 in the right group of pixels), the position of the group of the reference pixels may be indicated by position = 0x01 (the right neighboring quartet (group of pixels)), the position of the reference pixels may be indicated by ref_sub_video_ID = 0, and a_factor, b_factor and c_factor may be presented as a_factor = 1, b_factor = 3, and c_factor = 0.

When i = 1 (pixels of sub_video 1 in the same group of pixels), the position of the group of the reference pixels may be indicated by position = 0x00 (the same quartet (group of pixels)), the position of the reference pixels may be indicated by ref_sub_video_ID = 1, and a_factor, b_factor and c_factor may be presented as a_factor = 1, b_factor = 3, and c_factor = 0.

When i = 2 (pixels of sub_video 2 in the same group of pixels), the position of the group of the reference pixels may be indicated by position = 0x00 (the same quartet (group of pixels)), the position of the reference pixels may be indicated by ref sub_video_ID = 2, and a_factor, b_factor and c_factor may be presented as a_factor = 1, b_factor = 3, c_factor = 0.

Hereinafter, a description will be given of a receiver that outputs a UHD video or HD video using the UHD video stream and the signaling information according to the method described above. Examples of the receiver may include a receiver that can receive and express a UHD video, and a receiver which can express an HD video, a part of the UHD video. Embodiments of output of a video by these two receivers will be schematically described below.

A description will first be given of a conventional HD video receiver which receives a UHD sub-stream and outputs an HD video.

In the case that a video carrying a service is transmitted over an HD compatible stream (UHD_sub_service_type==001), the receiver may output an HD video in the same manner as in receiving a conventional HD video. In this case, the UHD sub-service (video) transmitted over the HD compatible stream may be signaled with the same service_type and stream_type (in the case of PSI signaling, service_type==0x02 and stream_type==0x1B) as in the case of a broadcast service including a conventional HD video. The conventional HD video receiver cannot recognize the descriptors included in the PMT, such as the sub-stream descriptor (UHDTV_sub_stream_descriptor ()) and the combine descriptor ((UHDTV_service_combine_descriptor ()). Accordingly, if the service is not transmittee over an HD compatible stream, the receiver fails to recognize a new service_type (the UHD service type), and thus cannot recognize the channel.

A receiver capable of receiving and expressing a UHD video may combine received sub-streams and output a UHD video. Embodiments of this receiver will be described below.

First, the receiver determines whether a separate service or medium needs to be additionally received to implement an original UHD video, using signaling information received over a first channel (service), for example, the combine descriptor (UHDTV_service_combine_descriptor) of the PMT.

If data to be received over a separate channel or path exist, the receiver may obtain, from the signaling information, connection information through which an associated service can be received.

To receive the associated service, the receiver uses a separate tuner (or a Internet access module) to tune (acsess) a second (or a third) associated service based on the pre-acquired connection information.

In some cases (e.g., when linked_media_sync_type indicates asynchronous mode), schedules of the components of a UHD video received over the first channel and second and third paths associated therewith may be different from each other. In this case, necessary data may be stored or received in advance using the schedule information received over each channel.

Then, sub-streams received over the first, second and third channels (paths) are decoded.

In this case, the receiver may acquire information for reconstruction of the UHD video through a sub-stream descriptor (UHDTV_sub_stream_descriptor) allocated to each of the sub-streams belonging to a service. From the acquired information, the receiver may obtain information about, for example, the sub_video included in each stream and a sample grid in the entire UHD video where the sub_video is located.

The video merger may restore the UHD video using multiple sub-videos based on the obtained information.

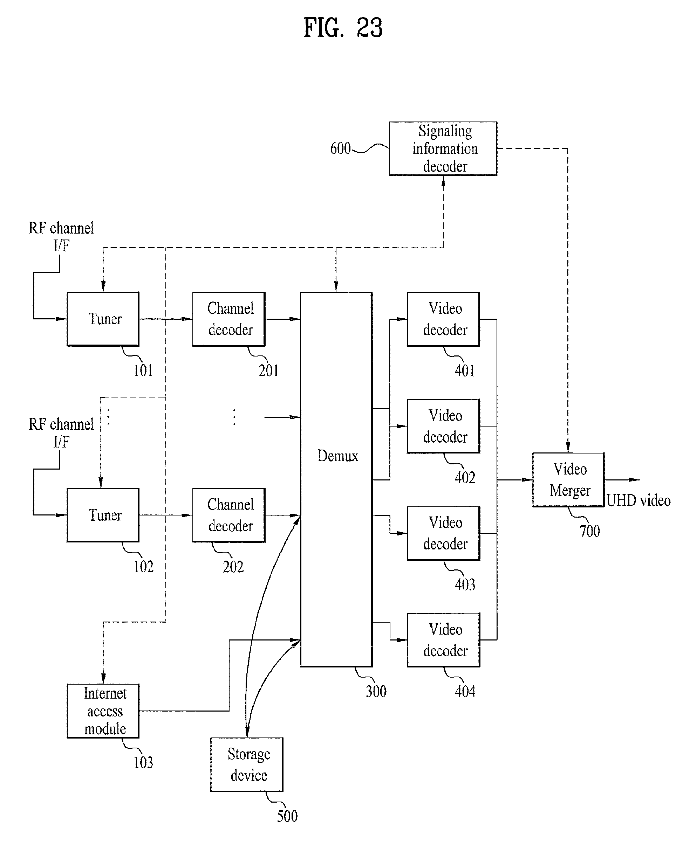

FIG. 23 is a view illustrating an example of the receiver described above according to one embodiment of the present invention. The receiver may include a receive unit, a channel decoder, a demultiplexer 300, a video decoder, a storage device 500, a signaling information decoder 600, and a video merger 700.

The receive unit 100 may include at least one tuner or/and at least one Internet access module 101, 102, 103.

The at least one tuner 101, 102 of the receive unit may receive each RF channel including a UHD video signal. The Internet access module 103 of the receive unit may receive an Internet signal including a UHD video signal. Herein, UHD video signal may transmit the entire UHD video, or may be a video signal split from the UHD video. The video signal split from the UHD video may be a signal compatible with an HD video.

The channel decoder 201, 202 may channel-decode a broadcast signal tuned by the tuner 101, 102.

The demultiplexers 300 may receive a channel-decoded video signal and/or Internet signal and demultiplex video signals split from the UHD video respectively. Herein, when the demultiplexed video signals merged, they may become the UHD video.

The signaling information decoder 600 may decode the signaling information transmitted over the broadcast signal or Internet signal. The combine descriptor and the stream descriptor of the signaling information have already been exemplarily described above.

Each of the video decoders 401, 402, 403 and 404 may decode the demultiplexed using the decoded signaling information or the signaling information in the video stream. The decoded signaling information is illustrated in FIGs. 5, 13 and 21, and the signaling information in the video stream is illustrated in FIGs. 17 and 19.

In the case that the decoded video signal is a video split from the UHD video, the video merger 700 may merge the decoded video signals and output a UHD video signal. The receiver may include one of the four illustrated video processing paths. If the decoded video signal is a video split from the UHD video, and each split video is compatible with the HD video, the receiver may output an HD video, which is produced by subsampling the original UHD video, using the decoded signaling information.

The storage device 500 may store at least one tuner or/and a video signal received from at least one Internet access module 101, 102, 103. In the case that the HD video streams split from the UHD video are transmitted in the asynchronous manner, the storage device 500 may first store the received video streams.

In addition, when a video stream allowing output of an UHD video are received, the video streams stored in the storage device 500 as well as the received video stream may be decoded and the video merger 700 may merge the decoded HD video streams and output the UHD video.

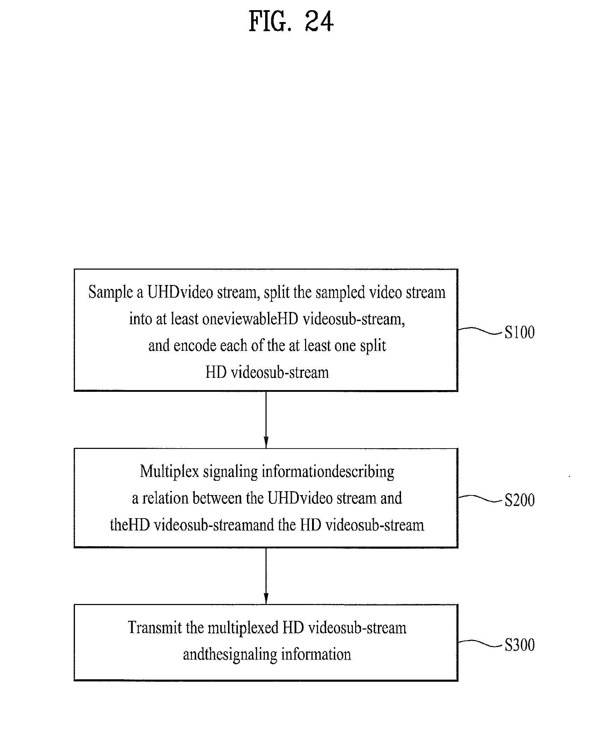

FIG. 24 is a view illustrating a video stream transmission method according to one embodiment of the present invention.

A UHD video stream is sampled and split into at least one viewable HD video sub-stream, and then the split HD video sub-streams are encoded (S100). FIG. 1 illustrates one embodiment of this method. As a sampling factor, a sub-video sampling factor, or a horizontal/vertical sampling factor may be used.

The signaling information describing the relation between the UHD video stream and the at least one HD video sub-stream and the at least one HD video sub-stream are multiplexed (S200). The multiplexed stream is given a sub_stream_ID, and the signaling information may include the corresponding sub_stream ID. In addition, when at least one HD sub-video is transmitted to one stream, the stream may be transmitted using the interleaving mode of the signaling information. The signaling information is illustrated in FIGs. 5, 13 and 21. Each HD video sub-stream may also include the signaling information, which is illustrated in FIGs. 17 to 19.

The multiplexed HD video sub-stream and the signaling information are transmitted (S300).

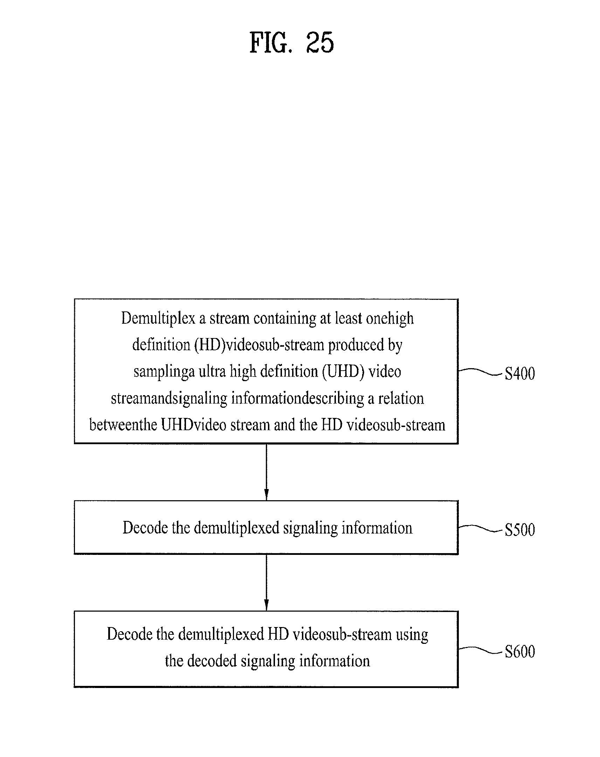

FIG. 25 is a view illustrating a video stream reception method according to one embodiment of the present invention.

a stream including the HD video sub-streams produced by sampling the UHD video stream and the signaling information describing the relation between the UHD video stream and the HD video sub-streams is demultiplexed (S400). An example of demultiplexing plural steams is illustrated in FIGs. 3 and 23. The streams may be transmitted over a broadcast medium or an Internet transmission medium.

The demultiplexed signaling information is decoded (S500). The signaling information is illustrated in FIGs. 5, 13 and 21. Each HD video sub-stream may also include the signaling information, which is illustrated in FIGs. 17 to 19.

Using the decoded signaling information, the HD video sub-streams are decoded (S600). When the HD video sub-streams are decoded, the UHD video stream may be expressed using the signaling information describe the relation between the UHD video stream and the HD video sub-streams, or only the HD video stream may be expressed.

[Embodiments of the Present Invention]

Embodiments of the present invention are all disclosed above.

[Industrial Applicability]

Embodiments of the present invention provide video stream transmitting and receiving devices/methods which allow efficient transmission and reception of a ultra high definition video stream, and is compatible with a current broadcast system, and thus they are available in the industry.

**Claims**

1. A video stream transmission method comprising the steps of:

sampling a ultra high definition (UHD) video stream, splitting the sampled video stream into at least one viewable high definition (HD) video sub-stream, and encoding each of the at least one split HD video sub-stream; multiplexing signaling information describing a relation between the UHD video stream and the HD video sub-stream and the HD video sub-stream; and transmitting the multiplexed HD video sub-stream and the signaling information.

2. The video stream transmission method according to claim 1, wherein the signaling information comprises an identifier of the HD video sub-stream or sampling mode information about the sampling.

3. The video stream transmission method according to claim 1, wherein the signaling information comprises an identifier to identify a sub-video with a size of an HD frame included in a UHD screen.

4. The video stream transmission method according to claim 1, wherein the signaling information comprises resolution information about a UHD screen.

5. The video stream transmission method according to claim 1, wherein the signaling information comprises information about a transmission medium for the HD video sub-stream.

6. A video stream reception method comprising:

demultiplexing a stream containing at least one high definition (HD) video sub-stream produced by sampling a ultra high definition (UHD) video stream and signaling information describing a relation between the UHD video stream and the HD video sub-stream; decoding the demultiplexed signaling information; and decoding the demultiplexed HD video sub-stream using the decoded signaling information.

7. The video stream reception method according to claim 6, wherein the signaling information comprises a descriptor to describe the HD video sub-stream.

8. The video stream reception method according to claim 7, wherein the descriptor comprises information about the sampling.

9. The video stream reception method according to claim 6, wherein the signaling information comprises a descriptor to describe the relation between the UHD video stream and the HD video sub-stream.

10. The video stream reception method according to claim 9, wherein the descriptor comprises service type information to be provided to the HD video sub-stream.

11. A video stream transmitting device comprising:

an encoder to sample a ultra high definition (UHD) video stream, split the sampled video stream into at least one viewable high definition (HD) video sub-stream, and encode each of the at least one split HD video sub-stream; a multiplexer to multiplex signaling information describing a relation between the UHD video stream and the HD video sub-stream and the HD video sub-stream; and a transmitter to transmit the multiplexed HD video sub-stream and the signaling information.

12. The video stream transmitting device according to claim 11, wherein the signaling information comprises a descriptor to describe the HD video sub-stream.

13. The video stream transmitting device according to claim 12, wherein the descriptor comprises the descriptor comprises information about the sampling.

14. The video stream transmitting device according to claim 11, wherein the signaling information comprises the signaling information comprises a descriptor to describe the relation between the UHD video stream and the HD video sub-stream, and the descriptor comprises service type information to be provided to the HD video sub-stream.

**15.** The video stream transmitting device according to claim 11, wherein the HD video sub-stream comprises information about the sampling.

**16.** A video stream receiving device comprising:

a demultiplexer to demultiplex a stream containing at least one high definition (HD) video sub-stream produced by sampling a ultra high definition (UHD) video stream and signaling information describing a relation between the UHD video stream and the HD video sub-stream;
a signaling information decoder to decode the demultiplexed signaling information; and
a video decoder to decode the demultiplexed HD video sub-stream using the decoded signaling information.

**17.** The video stream receiving device according to claim 16, wherein the signaling information comprises an identifier of the HD video sub-stream or sampling mode information about the sampling.

**18.** The video stream receiving device according to claim 16, wherein the signaling information comprises an identifier to identify a sub-video with a size of an HD frame included in a UHD screen.

**19.** The video stream receiving device according to claim 16, wherein the signaling information comprises resolution information about a UHD screen, information about a transmission medium for the HD video sub-stream.

**20.** The video stream receiving device according to claim 16, wherein the HD video sub-stream comprises information about the sampling.

# FIG. 1

FIG. 2

# FIG. 3

| Demultiplexer | → | Video decoder | — | Full HD video (sub-video 0) |

Sub-video sampling factor: (even, even)

| Demultiplexer | → | Video decoder | — | Full HD video (sub-video 1) |

Sub-video sampling factor: (odd, even)

Video Splitter

| Demultiplexer | → | Video decoder | — | Full HD video (sub-video 2) |

Sub-video sampling factor: (even, odd)

| Demultiplexer | → | Video decoder | — | Full HD video (sub-video 3) |

Sub-video sampling factor: (odd, odd)

3840

2160

UHDTV video

# FIG. 4

| Syntax | No. of bits | Mnemonic |
|---|---|---|
| TS_program_map_section() { | | |
|     table_id | 8 | uimsbf |
|     section_syntax_indicator | 8 | bslbf |
|     '0' | 1 | bslbf |
|     reserved | 1 | bslbf |
|     section_length | 12 | uimsbf |
|     program_number | 16 | uimsbf |
|     reserved | 2 | bslbf |
|     version_number | 5 | uimsbf |
|     current_next_indicator | 1 | bslbf |
|     section_number | 8 | uimsbf |
|     last_section_number | 8 | uimsbf |
|     reserved | 3 | bslbf |
|     PCR_PID | 13 | uimsbf |
|     reserved | 4 | bslbf |
|     program_info_length | 12 | uimsbf |
|     for (i=0; i<N; i++) { | | |
|       descriptor()  → UHDTV_service_combine_descriptor() | | |
|     } | | |
|     for (i=0; i<N; i++) { | | |
|       stream_type | 8 | uimsbf |
|       reserved | 3 | bslbf |
|       elementary_PID | 13 | uimsbf |
|       reserved | 4 | bslbf |
|       ES_info_length | 12 | uimsbf |
|       for (i=0; i<N2; i++) { | 4 | bslbf |
|         descriptor()  → UHDTV_sub_stream_descriptor() | | |
|       } | | |
|     } | | |
|     CRC_32 | | |
| } | | |

# FIG. 5

| Syntax | No. of bits | Format |
|---|---|---|
| UHDTV_sub_stream_descriptor ( ) { | | |
|     descriptor_tag | 8 | uimsbf |
|     descriptor_length | 8 | uimsbf |
|     sub_stream_ID | 16 | uimsbf |
|     UHD_subsampling_mode | 2 | uimsbf |
|     compatibility_level | 3 | uimsbf |
|     reserved | 3 | '111' |
|     if (compatibility_level==000 && UHD_subsampling_mode!=00) { | | |
|         num_sub_videos_in_stream | 3 | uimsbf |
|         interleaving_mode | 2 | uimsbf |
|         reserved | 3 | '111' |
|         for (i=0; i<num_sub_videos_in_stream; i++) { | | |
|             reserved | 4 | '111' |
|             sub_video_ID | 4 | uimsbf |
|             horizontal_sampling_factor | 2 | uimsbf |
|             vertical_sampling_factor | 2 | uimsbf |
|             delta_coding_flag | 1 | uimsbf |
|             reserved | 3 | '111' |
|             if (delta_coding_flag==1) { | | |
|                 ref_sub_video_flag | 16 | uimsbf |
|             } | | |
|         } | | |
|     } | | |
|     else if (compatibility_level==010 && UHD_subsampling_mode!=00) { | | |
|         sub_video_ID | | |
|         horizontal_sampling_factor | 4 | uimsbf |
|         vertical_sampling_factor | 2 | uimsbf |
|     } | 2 | uimsbf |
|     else if (compatibility_level==010 && UHD_subsampling_mode!=00) { | | |
|         for (i=0; i<4; i++) { | | |
|             sub_video_ID | 4 | uimsbf |
|             horizontal_sampling_factor | 2 | uimsbf |
|             vertical_sampling_factor | 2 | uimsbf |
|         } | | |
|     } | | |
| } | | |

# FIG. 6

| UHD_subsampling_mode | |
|---|---|
| 00 | No split (UHD program is configured as one stream and transmitted) |
| 01 | HD compatible sub-sampling (a technique of splitting a stream through line-by-line sampling. One of the streams is configured as a HD compatible stream) |
| 10 | Sub-partition (a stream is configured for each neighboring area. This is useful when signaling is provided to a multivision device) |
| 11 | reserved |

# FIG. 7

| compatibility_level | |
|---|---|
| 000 | Non-compatible (It is not possible to output a meaningful video only with this stream) |
| 001 | Reserved |
| 010 | Compatible with 1920 x 1080 (HDTV) (immediately output from a conventional DTV receiver) |
| 011 | Reserved |
| 100 | Compatible with 3840 x 2160 (4K UHDTV) |
| 101 | Reserved |
| 110 | Reserved |
| 111 | Reserved |

FIG. 8

sub-video 0
Horiz_sample_factor==0
Vertic_sample_factor==0

sub-video 1
Horiz_sample_factor==1
Vertic_sample_factor==0

sub-video 2
Horiz_sample_factor==0
Vertic_sample_factor==1

sub-video 3
Horiz_sample_factor==1
Vertic_sample_factor==1

Stream 0
sub_stream_ID==0

Stream 1
sub_stream_ID==1
Num_sampling_sets_in_stream==3

# FIG. 9

3840

0 1 0 1 0 1
2 3 2 3 2 3
0 1 0 1 0 1
2 3 2 3 2 3    . . .
0 1 0 1 0 1
2 3 2 3 2 3

2160

⋮

Original UHD Image

sub-sampling

0 1 0 1 0 1
2 3 2 3 2 3
0 1 0 1 0 1
2 3 2 3 2 3
0 1 0 1 0 1
2 3 2 3 2 3

1920

1 1 1 1 1 1
2 2 2 2 2 2
1 1 1 1 1 1
2 2 2 2 2 2    . . .
1 1 1 1 1 1
2 2 2 2 2 2

2160

⋮

interleaving_mode='00'

0 1 0 1 0 1
2 3 2 3 2 3
0 1 0 1 0 1
2 3 2 3 2 3
0 1 0 1 0 1
2 3 2 3 2 3

3840

1 2 1 2 1 2
1 2 1 2 1 2
1 2 1 2 1 2    . . .
1 2 1 2 1 2
1 2 1 2 1 2
1 2 1 2 1 2

1080

⋮

interleaving_mode='01'

# FIG. 10

Original UHD Image

sub-sampling

interleaving_mode='10'

interleaving_mode='11'

# FIG. 11

(a) HD compatible sub-sampling (UHD_subsampling_mode==01)

(b) Sub-partition (UHD_subsampling_mode==10)

# FIG. 12

| 15 | 14 | 13 | 12 | 11 | 10 | 9 | 8 | 7 | 6 | 5 | 4 | 3 | 2 | 1 | 0 |
|----|----|----|----|----|----|---|---|---|---|---|---|---|---|---|---|
| 0 | 0 | 0 | 0 | 0 | 1 | 0 | 0 | 1 | 0 | 1 | 0 | 0 | 1 | 0 | 0 |

ref_sub_video_flag

# FIG. 13

| Syntax | No. of bits | Format |
|--------|-------------|--------|
| UHDTV_service_combine_descriptor ( ) { | | |
| descriptor_tag | 8 | uimsbf |
| descriptor_length | 8 | uimsbf |
| original_UHD_resolution | 2 | uimsbf |
| UHD_sub_service_type | 3 | uimsbf |
| reserved | 3 | '111' |
| num_linked_media | 8 | uimsbf |
| for (i=0; i<num_linked_media; i++) { | | |
| linked_media_type | 2 | uimsbf |
| linked_media_sync_type | 3 | uimsbf |
| reserved | 3 | '111' |
| if (linked_media_type == 0) { | | |
| reserved | 5 | '11111' |
| linked_UHD_sub_service_type | 3 | uimsbf |
| associated_program_TSID | 16 | uimsbf |
| associated_service_original_network_id | 16 | uimsbf |
| associated_service_id | 16 | uimsbf |
| } | | |
| else if (linked_media_type == 1) { | | |
| reserved | 5 | '11111' |
| linked_UHD_sub_service_type | 3 | uimsbf |
| internet_linkage_information () | | |
| } | | |
| } | | |
| } | | |

# FIG. 14

| UHD_sub_service_type | Meaning |
|---|---|
| 000 | Current service does not include a stream which can be exclusively output (Only non-compatible streams are present. Additional data needs to be received through anotherservice or mediumin addition to the data provided from the current service) |
| 001 | An HD compatible stream is included in thecurrentUHDservice, but a 4K UHDor 8K UHDservice is not exclusively supportable. UHD broadcast can be supported only when additional data is received through anotherservice or mediumin addition to the data provided from the current service. |
| 010 | A 4K UHD compatible stream is included in the current UHDservice, but a HD or 8K UHDserviceis not exclusively supportable. UHD broadcast can be supported only when additional data is received through anotherservice or mediumin addition to the data provided from the current service. |
| 011 | All streams needed to support theoriginalUHDbroadcastare included in the current UHDservice (theoriginalUHDbroadcast refers to UHDbroadcastcorresponding to the value of the original_UHD_resolution). |
| 100 | Reserved |
| 101 | Reserved |
| 110 | Reserved |
| 111 | Reserved |

# FIG. 15

| UHD_resolution | |
|---|---|
| 00 | 3840 x 2160 (4K-UHDTV) |
| 01 | 7680 x 4320 (8K-UHDTV) |
| 10 | Reserved |
| 11 | Reserved |

# FIG. 16

| Field | Meaning |
|---|---|
| 000 | Only synchronous UHD delivery is possible for the linked UHD sub-service. |
| 001 | Only asynchronous UHD delivery is possible for the linked UHD sub-service. The UHD sub-service referenced by linked information (associated_service_TSID, associated_service_original_network_id, associated_service_id, and internet_linkage_internet_linkage_information) is delivered afterwards. |
| 010 | Only asynchronous UHD delivery is possible for the linked UHD sub-service. The UHD sub-service referenced by linked information ((associated_service_TSID, associated_service_original_network_id, associated_service_id, and internet_linkage_information) was previously delivered. |
| 011 | Both synchronous and asynchronous UHD deliveries are possible for the linked UHD sub-service. The UHD sub-service referenced by linked information ((associated_service_TSID, associated_service_original_network_id, associated_service_id, and internet_linkage_information) is re-delivered afterwards and it is simultaneously delivered with current event as well. |
| 100 | Both synchronous and asynchronous UHD deliveries are possible for the linked UHD sub-service. The UHD sub-service referenced by linked information ((associated_service_TSID, associated_service_original_network_id, associated_service_id, and internet_linkage_information) was already delivered and it is simultaneously delivered with current event as well. |

# FIG. 17

| Syntax | No. of bits | Format |
|---|---|---|
| user_data_registered_itu_t_t35 () { | | |
| itu_t_t35_country_code | 8 | bslbf |
| itu_t_t35_provider_code | 16 | bslbf |
| user_identifier | 32 | bslbf |
| user_structure() | | |
| } | | |

user_data_identifier = 0x4741 3934

| Syntax | No. of bits | Format |
|---|---|---|
| ATSC_user_data ( ) { | | |
| user_data_type_code | 8 | uimsbf |
| user_data_type_structure () | | |
| } | | |

UHD_subsampling_info ( )

If user_data_type_code=0x1B, it can be known that the content of user_data_type_structureindicatesUHD_subsampling_info

# FIG. 18

| sei_message( ) { | C | Descriptor |
|---|---|---|
| payloadType = 0 | | |
| while(next_bits( 8 ) = = 0xFF ) } | | |
| ff_byte /* equal to 0xff */ | 5 | f(8) |
| payloadType += 255 | | |
| } | | |
| last_payload_type_byte | 5 | f(8) |
| payloadType += last_payload_type_byte | | |
| payloadSize = 0 | | |
| while(next_bits( 8 ) = = 0xFF ) } | 5 | f(8) |
| ff_byte /* equal to 0xff */ | | |
| payloadType += 255 | | |
| } | | |
| last_payload_type_byte | 5 | f(8) |
| payloadType += last_payload_type_byte | | |
| payloadSize = 0 | 5 | |
| } | | |

| sei_payload (payloadType, payloadSize) | c | Format |
|---|---|---|
| if(payloadType==37) | | |
| UHD_subsampling_info (payloadSize ) | 5 | |

# FIG. 19

| Syntax | C | Format |
|---|---|---|
| UHD_subsampling_info (payloadSize ) { | | |
|     sub_video_id | 5 | u(4) |
|     UHD_subsampling_mode | 5 | u(2) |
|     compatibility_level | 5 | u(3) |
|     if (compatibility_level==000 && UHD_subsampling_mode!=00) { | | |
|         num_sub_videos_in_stream | 5 | u(3) |
|         for (i=0; i<num_sub_videos_in_stream; i++) { | | |
|             sub_video_ID | 5 | u(4) |
|             horizontal_sampling_factor | 5 | u(2) |
|             vertical_sampling_factor | 5 | u(2) |
|             delta_coding_flag | 5 | u(1) |
|             if (delta_coding_flag==1) { | | |
|                 ref_sub_video_flag | 5 | u(16) |
|             } | | |
|         } | | |
|     else if (compatibility_level==010 && UHD_subsampling_mode!=00) { | | |
|         sub_video_ID | 5 | u(4) |
|         horizontal_sampling_factor | 5 | u(2) |
|         vertical_sampling_factor | 5 | u(2) |
|     } | | |
|     else if (compatibility_level==100 && UHD_subsampling_mode!=00) { | | |
|         for (i=0; i<4; i++) { | | |
|             sub_video_ID | 5 | u(4) |
|             horizontal_sampling_factor | 5 | u(2) |
|             vertical_sampling_factor | 5 | u(2) |
|         } | | |
|     } | | |
| } | | |

# FIG. 20

| Stream_content | Component_type | Meaning |
|---|---|---|
| 0x05 | 0x90 | H.264/AVC video, 4K UHD, 50Hz (25Hz), 16:9 |
| 0x05 | 0x91 | H.264/AVC video, 4K UHD, 60Hz (30Hz), 16:9 |
| 0x05 | 0x92 | H.264/AVC video, 8K UHD, 50Hz (25Hz), 16:9 |
| 0x05 | 0x93 | H.264/AVC video, 8K UHD, 60Hz (30Hz), 16:9 |
| 0x05 | 0x94 | H.264/AVC video, part of 4K UHD, 50Hz (25Hz), 16:9 |
| 0x05 | 0x95 | H.264/AVC video, part of 4K UHD, 60Hz (30Hz), 16:9 |
| 0x05 | 0x96 | H.264/AVC video, part of 8K UHD, 50Hz (25Hz), 16:9 |
| 0x05 | 0x97 | H.264/AVC video, part of 8K UHD, 60Hz (30Hz), 16:9 |
| 0x09 | 0x10 | Advanced codec video(ex. : HEVC), 4K UHD, 50Hz (25Hz), 16:9 |
| 0x09 | 0x11 | Advanced codec video(ex. : HEVC), 4K UHD, 60Hz (30Hz), 16:9 |
| 0x09 | 0x12 | Advanced codec video(ex. : HEVC), 8K UHD, 50Hz (25Hz), 16:9 |
| 0x09 | 0x13 | Advanced codec video(ex. : HEVC), 8K UHD, 60Hz (30Hz), 16:9 |
| 0x09 | 0x14 | Advanced codec video(ex. : HEVC), part of 4K UHD, 50Hz (25Hz), 16:9 |
| 0x09 | 0x15 | Advanced codec video(ex. : HEVC), part of 4K UHD, 60Hz (30Hz), 16:9 |
| 0x09 | 0x16 | Advanced codec video(ex. : HEVC), part of 8K UHD, 50Hz (25Hz), 16:9 |
| 0x09 | 0x17 | Advanced codec video(ex. : HEVC), part of 8K UHD, 60Hz (30Hz), 16:9 |
| 0x10 | 0x10 | Non-image part of UHDTV video |

# FIG. 21

| Syntax | No. of bits | Format |
|---|---|---|
| UHDTV_sub_stream_interpolation_descriptor ( ) { | | |
| descriptor_tag | 8 | uimsbf |
| descriptor_length | 8 | uimsbf |
| sub_video_ID | 4 | uimsbf |
| reserved | 4 | '1111' |
| horizontal_sampling_factor | 2 | uimsbf |
| vertical_sampling_factor | 2 | uimsbf |
| reserved | 4 | '1111' |
| num_filter_tap | 8 | uimsbf |
| for (i=0; i<num_filter_tap) { | | |
| position | 4 | uimsbf |
| ref_sub_video_ID | 4 | uimsbf |
| a_factor | 8 | bslbf |
| b_factor | 8 | bslbf |
| c_factor | 8 | bslbf |
| } | | |
| } | | |

# FIG. 22

| 0 | 1 | 0 | 1 | 0 | 1 |
|---|---|---|---|---|---|
| 2 | 3 | 2 | 3 | 2 | 3 |
| 0 | 1 | 0 | ①| ⓪| 1 |
| 2 | 3 | ②| 3 | 2 | 3 |
| 0 | 1 | 0 | 1 | 0 | 1 |
| 2 | 3 | 2 | 3 | 2 | 3 |

# FIG. 23

# FIG. 24

Sample a UHDvideo stream, split the sampled video stream
into at least oneviewableHD videosub-stream,
and encode each of the at least one split
HD videosub-stream — S100

Multiplex signaling informationdescribing
a relation between the UHDvideo stream and
theHD videosub-streamand the HD videosub-stream — S200

Transmit the multiplexed HD videosub-stream
andthesignaling information — S300

# FIG. 25

Demultiplex a stream containing at least onehigh
definition (HD)videosub-stream produced by
samplinga ultra high definition (UHD) video
streamandsignaling informationdescribing a relation
betweenthe UHDvideo stream and the HD videosub-stream ⎯S400

Decode the demultiplexed signaling information ⎯S500

Decode the demultiplexed HD videosub-stream using
the decoded signaling information ⎯S600